(19) Europäisches Patentamt
European Patent Office
Office européen des brevets

(11) **EP 4 250 421 A1**

(12) **EUROPEAN PATENT APPLICATION**
published in accordance with Art. 153(4) EPC

(43) Date of publication:
**27.09.2023 Bulletin 2023/39**

(21) Application number: **21894805.7**

(22) Date of filing: **18.06.2021**

(51) International Patent Classification (IPC):
*H01M 10/0562* (2010.01)    *H01M 4/62* (2006.01)
*H01M 4/131* (2010.01)    *H01M 4/136* (2010.01)
*H01M 10/0585* (2010.01)    *H01M 10/052* (2010.01)
*H01M 4/02* (2006.01)

(52) Cooperative Patent Classification (CPC):
**H01M 4/02; H01M 4/131; H01M 4/136; H01M 4/62;**
**H01M 10/052; H01M 10/0562; H01M 10/0585**

(86) International application number:
**PCT/KR2021/007659**

(87) International publication number:
**WO 2022/108027 (27.05.2022 Gazette 2022/21)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **20.11.2020 KR 20200156929**

(71) Applicant: **Samsung Electronics Co., Ltd.**
**Suwon-si, Gyeonggi-do 16677 (KR)**

(72) Inventors:
• **KIM, Taeyoung**
**Suwon-si, Gyeonggi-do 16678 (KR)**
• **BAE, Youngjoon**
**Suwon-si, Gyeonggi-do 16678 (KR)**

(74) Representative: **Elkington and Fife LLP**
**Prospect House**
**8 Pembroke Road**
**Sevenoaks, Kent TN13 1XR (GB)**

(54) **COMPOSITE SOLID ELECTROLYTE FOR SECONDARY BATTERY, SECONDARY BATTERY COMPRISING SAME, AND METHOD OF PREPARING SAME**

(57)    A composite solid electrolyte for a secondary battery, wherein the secondary battery includes an anode, wherein the composite solid electrolyte includes a first solid electrolyte including a compound represented by Formula 1, and a second solid electrolyte including a compound represented by Formula 2, and wherein the first solid electrolyte is disposed adjacent to the anode:

Formula 1    $Li_{1+x+2y}Al_xMg_yM1_{2-x-y}(PO_4)_3$

wherein in Formula 1,
M1 is germanium (Ge), zirconium (Zr), hafnium (Hf), tin (Sn), or a combination thereof, and

$$0 < x < 0.6 \text{ and } 0 < y < 0.2,$$

Formula 2    $Li_{1+x+2y}Al_xMg_yM2_{2-x-y}(PO_4)_3$

wherein in Formula 2,
M2 is titanium (Ti), germanium (Ge), zirconium (Zr), hafnium (Hf), tin (Sn), or a combination thereof, and

$$0 < x < 0.6 \text{ and } 0 \leq y < 0.2.$$

EP 4 250 421 A1

# FIG. 2

**Description**

CROSS-REFERENCE TO RELATED APPLICATION

This application is a continuation of International Patent Application No. PCT/KR2021/007659, filed on June 18, 2021, which claims priority to and the benefit of Korean Patent Application No. 10-2020-0156929, filed on November 20, 2020, the entire contents of which are incorporated herein by reference.

TECHNICAL FIELD

The disclosure relates to a composite solid electrolyte for a secondary battery, a secondary battery including the same, and a method of preparing the same.

BACKGROUND

A multilayer-ceramic (MLC) battery is generally manufactured by a co-sintering process after laminating an oxide-based cathode, a solid electrolyte, and an anode in multiple layers. A cathode, a solid electrolyte, and an anode, each having a different synthesis temperature, can be sintered at the same temperature.
Examples of the solid electrolyte include a perovskite-type solid electrolyte, a garnet-type solid electrolyte, and a sodium super ionic conductor (NASICON-type) solid electrolyte. Among the aforementioned solid electrolytes, the synthesis temperature of the perovskite-type or the garnet-type solid electrolytes can be 1,000°C or greater, and the synthesis temperature of the NASICON-type solid electrolyte is less than that of the perovskite-based or the garnet-based solid electrolytes, and therefore the NASICON-type solid electrolyte may be used as a solid electrolyte material in MLC batteries.
An oxide anode is used as the anode of the MLC battery. However, the reduction potential of the NASICON-type solid electrolyte is greater than the operating potential of the oxide anode, thus causing issues with a reduction reaction with an oxide anode. As a NASICON-type solid electrolyte, lithium aluminum germanium phosphate (LAGP) can be used due to its reduction voltage being less than the operating potential of an oxide-containing anode. However, since germanium (Ge) is expensive, the battery manufacturing costs are increased, and since the sintering temperature to obtain a dense LAGP is high, co-sintering of an oxide-containing anode, a solid electrolyte, and an anode is required to be performed at a high temperature. Co-sintering performed at a high temperature may deteriorate the performance of an oxide-containing anode and a cathode, and therefore there remains a continuing need for improvements in this regard.

SUMMARY

An aspect provides a composite solid electrolyte for a secondary battery, having improved stability with an anode material.
Another aspect provides a secondary battery including the composite solid electrolyte for a secondary battery.
Still another aspect provides a method of preparing the above-described secondary battery.
According to an aspect, a composite solid electrolyte for a secondary battery is provided,

wherein the secondary battery includes an anode,
wherein the composite solid electrolyte includes a first solid electrolyte including a first compound represented by Formula 1, and a second solid electrolyte including a second compound represented by Formula 2,
wherein the first solid electrolyte is disposed adjacent to the anode:

Formula 1        $Li_{1+x+2y}Al_xMg_yM1_{2-x-y}(PO_4)_3$

wherein, in Formula 1,
M1 is germanium (Ge), zirconium (Zr), hafnium (Hf), tin (Sn), or a combination thereof, and

$$0 < x < 0.6 \text{ and } 0 < y < 0.2,$$

Formula 2        $Li_{1+x+2y}Al_xMg_yM2_{2-x-y}(PO_4)_3$

wherein, in Formula 2,

M2 is titanium (Ti), germanium (Ge), zirconium (Zr), hafnium (Hf), tin (Sn), or a combination thereof, and

$$0<x<0.6 \text{ and } 0 \leq y < 0.2.$$

According to another aspect, provided is a secondary battery including an anode, a cathode, and a solid electrolyte disposed between the anode and the cathode,
wherein at least one of the cathode, the anode, and the solid electrolyte includes the composite solid electrolyte.
According to another aspect, a method of preparing a secondary battery includes:

preparing a battery laminate by stacking an anode, a composite solid electrolyte, and a cathode,
wherein the composite solid electrolyte includes a first solid electrolyte including a first compound represented by Formula 1, and a second solid electrolyte including a second compound represented by Formula 2; and
heat-treating the battery laminate at a temperature of less than 800°C,
wherein the first solid electrolyte is disposed adjacent to the anode:

Formula 1        $Li_{1+x+2y}Al_xMg_yM1_{2-x-y}(PO_4)_3$

wherein, in Formula 1,
M1 is germanium (Ge), zirconium (Zr), hafnium (Hf), tin (Sn), or a combination thereof, and

$$0<x<0.6 \text{ and } 0<y<0.2,$$

Formula 2        $Li_{1+x+2y}Al_xMg_yM2_{2-x-y}(PO_4)_3$

wherein, in Formula 2,
M2 is titanium (Ti), germanium (Ge), zirconium (Zr), hafnium (Hf), tin (Sn), or a combination thereof, and
$0<x<0.6$ and $0 \leq y<0.2$ may be satisfied.

BRIEF DESCRIPTION OF DRAWINGS

The above and other aspects, features, and advantages of certain embodiments of the disclosure will be more apparent from the following description taken in conjunction with the accompanying drawings, in which:

FIG. 1 is a cross-sectional view and schematically shows a stacking structure of a secondary battery according to one or more embodiments.
FIG. 2 is a graph of current density (milliamperes per square centimeter, mA/cm$^2$) versus potential (Volts (V) versus Li/Li$^+$) and shows the results of linear scan voltammetry analysis in cells prepared according to Example 1 and Comparative Example 8.
FIG. 3 is a graph of current density (mA/cm$^2$) versus potential (V vs. Li/Li$^+$) and shows a magnified view of an area depicted in FIG. 2.
FIG. 4 is a cross-sectional view and schematically shows a structure of a multi-layer ceramic battery according to one or more embodiments.
FIG. 5 and FIG. 6 are each cross-sectional views and schematically show a structure of a secondary battery according to another embodiment.
FIG. 7A and FIG. 7B are each cross-sectional views and illustrate a laminated body according to other modes of an all-solid secondary battery according to one or more embodiments.
FIG. 8 is a cross-sectional view and shows a structure of a laminated body forming an all-solid secondary battery according to one or more embodiments.
FIG. 9 is a cross-sectional view of an all-solid secondary battery according to one or more embodiments.
FIG. 10 is a cross-sectional view of an all-solid secondary battery according to another embodiment.
FIG. 11A is a scanning electron microscope image and shows the results of scanning electron microscopy analysis of a composite solid electrolyte prepared according to Example 1.
FIG. 11B and FIG. 11C a scanning electron microscope images and show the results of SEM-EDS analysis of a composite solid electrolyte of Example 1.
FIG. 12 is schematic image showing a change in diameter of a sintered body obtained through a heat-treatment in the preparation of solid electrolytes of Comparative Examples 1 to 6.

[Explanation for reference number]

| | | | |
|---|---|---|---|
| 1: | solid secondary battery | 10: | cathode layer |
| 11: | cathode positive electrode | 12: | cathode active material layer |
| 20: | anode layer | 21: | anode current collector |
| 22: | anode active material layer | 30: | solid electrolyte layer |
| 31: | first solid electrolyte | 32: | second solid electrolyte |

DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

In the drawings, a thickness is enlarged or reduced to clearly represent various layers and regions. The same reference numerals were attached to similar portions throughout the disclosure. As used herein throughout the disclosure, when a layer, a membrane, a region, or a plate is described to be "on" or "above" something else, it not only includes the case in which it is right above something else but also the case when other portion(s) are present in-between. Terms like "first", "second", and the like may be used to describe various components, but the components are not limited by the terms. The terms are used merely for the purpose of distinguishing one component from other components.

As used herein, a "particle diameter" of particles indicates an average diameter when the particles are spherical, and an average length of the long axis when the particles are non-spherical. Particle diameters of particles may be measured by using a particle size analyzer (PSA). A "particle diameter" of particles is, for example, an "average particle diameter". An average particle diameter is, for example, a median particle diameter (D50). The median particle diameter (D50) is, for example, a particle diameter corresponding to a 50 % cumulative volume calculated from particles having small particle diameters in a particle diameter distribution, measured by a laser diffraction method.

Hereinbelow, a composite solid electrolyte for a secondary battery according to one or more embodiments, a secondary battery including the same, and a method of preparing the same will be described in further detail.

Provided is a composite solid electrolyte for a secondary battery, wherein the secondary battery includes an anode, wherein the composite solid electrolyte includes a first solid electrolyte including a first compound represented by Formula 1, and a second solid electrolyte including a compound represented by Formula 2, and wherein the first solid electrolyte is disposed adjacent to the anode:

Formula 1 $\quad Li_{1+x+2y}Al_xMg_yM1_{2-x-y}(PO_4)_3$

wherein, in Formula 1,

M1 is germanium (Ge), zirconium (Zr), hafnium (Hf), tin (Sn), or a combination thereof, and

$$0<x<0.6 \text{ and } 0<y<0.2,$$

Formula 2 $\quad Li_{1+x+2y}Al_xMg_yM2_{2-x-y}(PO_4)_3$

wherein, in Formula 2,
M2 is titanium (Ti), germanium (Ge), zirconium (Zr), hafnium (Hf), tin (Sn), or a combination thereof, and

$$0<x<0.6 \text{ and } 0\leq y<0.2.$$

An oxide such as lithium titanium oxide or titanium oxide may be used as an anode material for a multilayer ceramic (MLC) battery.

As a solid electrolyte of the MLC battery, a NASICON type solid electrolyte may be used. Examples of the NASICON type solid electrolyte may include a lithium aluminum titanium phosphate (LATP) solid electrolyte, a lithium aluminum germanium phosphate (LAGP) solid electrolyte, or the like.

When using a lithium aluminum titanium phosphate (LATP) solid electrolyte in combination with the above-described oxide anode, the reduction potential of the above-described oxide may be 1.5 Volts (V) to 1.7 V, and the reduction potential of the LATP may be 2.4 V. Since the reduction potential of LATP is greater than the reduction potential of the oxide anode, such an LATP solid electrolyte may have applicability issues due to reduction reactivity with oxide anodes.

When using a lithium aluminum germanium phosphate (LAGP) solid electrolyte in combination with the above-described oxide anode, the reduction potential of the LAGP is about 0.96 V, and therefore can be used with an oxide-containing anode. However, since germanium (Ge) contained in the LAGP is costly, the manufacturing costs increase, and a simultaneous heat-treatment of a battery laminate containing an anode, a solid electrolyte, and a cathode is required to be carried out at a high temperature. As such, when the heat-treatment is performed at a high temperature and co-sintering is performed at a high temperature, the performance of an oxide-containing anode and cathode may deteriorate.

Accordingly, resolving the above-mentioned issues, the present inventors have arrived at a solid electrolyte that allows simultaneous heat-treatment of a battery laminate at a low temperature and has low manufacturing costs.

A composite solid electrolyte for a secondary battery according to an aspect includes a first solid electrolyte including a first compound represented by Formula 1, and a second solid electrolyte including a second compound represented by Formula 2. Here, the first solid electrolyte is disposed adjacent to an anode of a secondary battery:

$$\text{Formula 1} \qquad \text{Li}_{1+x+2y}\text{Al}_x\text{Mg}_y\text{M1}_{2-x-y}(\text{PO}_4)_3$$

wherein, in Formula 1,

M1 is germanium (Ge), zirconium (Zr), hafnium (Hf), tin (Sn), or a combination thereof, and

$$0<x<0.6 \text{ and } 0<y<0.2,$$

$$\text{Formula 2} \qquad \text{Li}_{1+x+2y}\text{Al}_x\text{Mg}_y\text{M2}_{2-x-y}(\text{PO}_4)_3$$

wherein, in Formula 2,
M2 is titanium (Ti), germanium (Ge), zirconium (Zr), hafnium (Hf), tin (Sn), or a combination thereof, and

$$0<x<0.6 \text{ and } 0 \leq y<0.2.$$

In Formula 1, M1 may be germanium (Ge), and in Formula 1, $0.1 \leq x \leq 0.5$ or $0.1 \leq x \leq 0.3$ may be satisfied; and $0.01 \leq y \leq 0.1$ or $0.01 \leq y \leq 0.05$ may be satisfied. In addition, in Formula 2, $y>0$; or $0.1 \leq x \leq 0.5$ and $0.01 \leq y \leq 0.1$ may be satisfied. In addition, in Formula 2, M2 may be titanium (Ti).

The first solid electrolyte material, disposed adjacent to the anode, may have a lower reduction potential than a reduction potential of the anode.

The anode may be, for example, an oxide anode. The oxide anode may be an oxide containing at least one element of Group 2 to Group 14 of the Periodic Table of Elements. Non-limiting examples of the oxide anode may include a lithium titanium oxide, a lithium transition metal oxide, a lithium metal phosphate, a titanium oxide, a vanadium oxide, or the like, or a combination thereof.

The lithium metal phosphate may be $\text{Li}_3\text{Fe}_2(\text{PO}_4)_3$, $\text{Li}_x\text{V}_2(\text{PO}_4)_3$ (wherein $0<x \leq 5$), or a combination thereof.

Non-limiting examples of the oxide anode may include a lithium compound that is at least one of $\text{Li}_{4/3}\text{Ti}_{5/3}\text{O}_4$, $\text{LiTiO}_2$, $\text{LiM1}_s\text{M2}_t\text{O}_u$ (wherein M1 and M2 are each a transition metal; and s, t, and u are each any positive number), $\text{TiO}_x$ ($0<x \leq 3$), $\text{V}_2\text{O}_5$, $\text{Li}_x\text{V}_2(\text{PO}_4)_3$ (wherein $0<x \leq 5$), or $\text{Li}_3\text{Fe}_2(\text{PO}_4)_3$, and for example, may be $\text{Li}_{4/3}\text{Ti}_{5/3}\text{O}_4$, $\text{LiTiO}_2$, or a combination thereof. Here, $\text{TiO}_x$ (wherein $0<x \leq 3$) may be, for example, $\text{TiO}_2$.

An oxide anode according to one or more embodiments may be, for example, a vanadium oxide ($\text{V}_2\text{O}_5$), $\text{Li}_4\text{Ti}_5\text{O}_{12}$, $\text{LiTiO}_2$, $\text{TiO}_2$, $\text{Li}_3\text{V}_2(\text{PO}_4)_3$, $\text{Li}_3\text{Fe}_2(\text{PO}_4)_3$, or a combination thereof.

In a case in which the oxide anode includes an oxide material such as a lithium titanium oxide (reduction potential: 1.5 V) or a titanium oxide (reduction potential: 1.7 V), the reduction potential of the first solid electrolyte is less than 1.5 V, which is lower than the reduction potential of the anode material. Accordingly, such a first solid electrolyte has excellent reduction stability with the anode material.

The thickness of the first solid electrolyte may be controlled within a range that ensures stability with oxide anode materials without causing issues with a reduction reaction with an oxide anode. The first solid electrolyte may have a thickness of 1 micrometer ($\mu$m) to 30 $\mu$m, 3 $\mu$m to 25 $\mu$m, 5 $\mu$m to 22 $\mu$m, or 10 $\mu$m to 20 $\mu$m. In addition, the second solid electrolyte may have a thickness of 50 $\mu$m to 500 $\mu$m, 80 $\mu$m to 480 $\mu$m, 100 $\mu$m to 460 $\mu$m, or 200 $\mu$m to 450 $\mu$m.

In a composite solid electrolyte according to one or more embodiments, the thickness ratio of the first solid electrolyte and the second solid electrolyte may be, for example, from 1:5 to 1:100, from 1:7 to 1:80, from 1:10 to 1:50, or from 1:15 to 1:30.

The first solid electrolyte and the second solid electrolyte may have a structure in which particles of each of the first solid electrolyte and the second solid electrolyte are connected to one another after simultaneous heat-treatment of a battery laminate, and interlayer particles at the boundary between the first solid electrolyte and the second solid electrolyte may be connected to one another. Such a structure may be confirmed by scanning electron microscopy (SEM) analysis.

The first compound represented by Formula 1 may be, for example, $Li_{1.2}Al_{0.1}Mg_{0.05}Ge_{1.85}(PO_4)_3$, $Li_{1.3}Al_{0.2}Mg_{0.05}Ge_{1.75}(PO_4)_3$, $Li_{1.4}Al_{0.3}Mg_{0.05}Ge_{1.65}(PO_4)_3$, $Li_{1.4}Al_{0.2}Mg_{0.1}Ge_{1.7}(PO_4)_3$, $Li_{1.2}Al_{0.1}Mg_{0.05}Zr_{1.85}(PO_4)_3$, $Li_{1.3}Al_{0.2}Mg_{0.05}Zr_{1.75}(PO_4)_3$, $Li_{1.4}Al_{0.3}Mg_{0.05}Zr_{1.65}(PO_4)_3$, $Li_{1.4}Al_{0.2}Mg_{0.1}Zr_{1.7}(PO_4)_3$, $Li_{1.2}Al_{0.1}Mg_{0.05}rHf_{1.85}(PO_4)_3$, $Li_{1.3}Al_{0.2}Mg_{0.05}Hf_{1.75}(PO_4)_3$, $Li_{1.4}Al_{0.3}Mg_{0.05}Hf_{1.65}(PO_4)_3$, $Li_{1.4}Al_{0.2}Mg_{0.1}Hf_{1.7}(PO_4)_3$, $Li_{1.2}Al_{0.1}Mg_{0.05}Sn_{1.85}(PO_4)_3$, $Li_{1.3}Al_{0.2}Mg_{0.05}Sn_{1.75}(PO_4)_3$, $Li_{1.4}Al_{0.3}Mg_{0.05}Sn_{1.65}(PO_4)_3$, $Li_{1.4}Al_{0.2}Mg_{0.1}Sn_{1.7}(PO_4)_3$, or a combination thereof. According to one or more embodiments, the compound represented by Formula 1 may be, for example, $Li_{1.2}Al_{0.1}Mg_{0.05}Ge_{1.85}(PO_4)_3$, $Li_{1.3}Al_{0.2}Mg_{0.05}Ge_{1.75}(PO_4)_3$, $Li_{1.4}Al_{0.3}Mg_{0.05}Ge_{1.65}(PO_4)_3$, or $Li_{1.4}Al_{0.2}Mg_{0.1}Ge_{1.7}(PO_4)_3$.

The second compound represented by Formula 2 may be, for example, $Li_{1.3}Al_{0.2}Mg_{0.05}Ti_{1.75}(PO_4)_3$, $Li_{1.2}Al_{0.1}Mg_{0.05}T1_{1.85}(PO_4)_3$, $Li_{1.4}Al_{0.3}Mg_{0.05}Ti_{1.65}(PO_4)_3$, $Li_{1.4}Al_{0.2}Mg_{0.1}Ti_{1.7}(PO_4)_3$, $Li_{1.3}Al_{0.2}Mg_{0.05}Ge_{1.75}(PO_4)_3$, $Li_{1.2}Al_{0.1}Mg_{0.05}Ge_{1.85}(PO_4)_3$, $Li_{1.4}Al_{0.3}Mg_{0.05}Ge_{1.65}(PO_4)_3$, $Li_{1.4}Al_{0.2}Mg_{0.1}Ge_{1.7}(PO_4)_3$, $Li_{1.3}Al_{0.2}Mg_{0.05}Zr_{1.75}(PO_4)_3$, $Li_{1.2}Al_{0.1}Mg_{0.05}Zr_{1.85}(PO_4)_3$, $Li_{1.4}Al_{0.3}Mg_{0.05}Zr_{1.65}(PO_4)_3$, $Li_{1.4}Al_{0.2}Mg_{0.1}Zr_{1.7}(PO_4)_3$, $Li_{1.3}Al_{0.2}Mg_{0.05}Hf_{1.75}(PO_4)_3$, $Li_{1.2}Al_{0.1}Mg_{0.05}Hf_{1.85}(PO_4)_3$, $Li_{1.4}Al_{0.3}Mg_{0.05}Hf_{1.65}(PO_4)_3$, $Li_{1.4}Al_{0.2}Mg_{0.1}Hf_{1.7}(PO_4)_3$, $Li_{1.3}Al_{0.2}Mg_{0.05}Sn_{1.75}(PO_4)_3$, $Li_{1.2}Al_{0.1}Mg_{0.05}Sn_{1.85}(PO_4)_3$, $Li_{1.4}Al_{0.3}Mg_{0.05}Sn_{1.65}(PO_4)_3$, $Li_{14}Al_{0.2}Mg_{0.1}Sn_{1.7}(PO_4)_3$, $Li_{1.5}Al_{0.5}Ge_{1.5}(PO_4)_3$, $Li_{1.5}Al_{0.5}Ti_{1.5}(PO_4)_3$, $Li_{1.5}Al_{0.5}Zr_{1.5}(PO_4)_3$, $Li_{1.5}Al_{0.5}Hf_{1.5}(PO_4)_3$, $Li_{1.5}Al_{0.5}Sn_{1.5}(PO_4)_3$, or a combination thereof. The compound represented by Formula 2 may be, for example, $Li_{1.3}Al_{0.2}Mg_{0.05}Ti_{1.75}(PO_4)_3$, $Li_{1.2}Al_{0.1}Mg_{0.05}T1_{1.85}(PO_4)_3$, $Li_{1.4}Al_{0.3}Mg_{0.05}Ti_{1.65}(PO_4)_3$, $Li_{1.4}Al_{0.2}Mg_{0.1}Ti_{1.7}(PO_4)_3$, or a combination thereof.

According to one or more embodiments, the first solid electrolyte of the composite solid electrolyte may include $Li_{1.2}Al_{0.1}Mg_{0.05}Ge_{1.85}(PO_4)_3$, $Li_{1.3}Al_{0.2}Mg_{0.05}Ge_{1.75}(PO_4)_3$, $Li_{1.4}Al_{0.3}Mg_{0.05}Ge_{1.65}(PO_4)_3$, $Li_{1.4}Al_{0.2}Mg_{0.1}Ge_{1.7}(PO_4)_3$, or a combination thereof, and the second solid electrolyte thereof may include $Li_{1.3}Al_{0.2}Mg_{0.05}Ti_{1.75}(PO_4)_3$, $Li_{1.2}Al_{0.1}Mg_{0.05}T1_{1.85}(PO_4)_3$, $Li_{1.4}Al_{0.3}Mg_{0.05}Ti_{1.65}(PO_4)_3$, $Li_{1.4}Al_{0.2}Mg_{0.1}Ti_{1.7}(PO_4)_3$, $Li_{1.3}Al_{0.2}Mg_{0.05}Hf_{1.75}(PO_4)_3$, $Li_{1.2}Al_{0.1}Mg_{0.05}Hf_{1.85}(PO_4)_3$, $Li_{1.4}Al_{0.3}Mg_{0.05}Hf_{1.65}(PO_4)_3$, $Li_{1.4}Al_{0.2}Mg_{0.1}Hf_{1.7}(PO_4)_3$, $Li_{1.3}Al_{0.2}Mg_{0.05}Zr_{1.75}(PO_4)_3$, $Li_{1.2}Al_{0.1}Mg_{0.05}Zr_{1.85}(PO_4)_3$, $Li_{1.4}Al_{0.3}Mg_{0.05}Zr_{1.65}(PO_4)_3$, $Li_{1.4}Al_{0.2}Mg_{0.1}Zr_{1.7}(PO_4)_3$, $Li_{1.3}Al_{0.2}Mg_{0.05}Sn_{1.75}(PO_4)_3$, $Li_{1.2}Al_{0.1}Mg_{0.05}Sn_{1.85}(PO_4)_3$, $Li_{1.4}Al_{0.3}Mg_{0.05}Sn_{1.65}(PO_4)_3$, $Li_{1.4}Al_{0.2}Mg_{0.1}Sn_{1.7}(PO_4)_3$, $Li_{1.5}Al_{0.5}Ge_{1.5}(PO_4)_3$, or a combination thereof.

A composite solid electrolyte according to one or more embodiments may have an ionic conductivity at room temperature (25°C) of $10^{-5}$ Siemens per centimeter (S/cm) or greater, $1\times10^{-5}$ S/cm to $1\times10^{-3}$ S/cm, or $4.5\times10^{-5}$ S/cm to $5\times10^{-4}$ S/cm, and a degree of densification of 70% to 99%, 76% to 90%, or 80% to 90%. For the degree of densification (i.e., the "density"), the weight and the dimensions of a solid electrolyte were measured, and the degree of densification was calculated from the ratio of density and theoretical density. The degree of densification and sintered density are proportional to each other.

The composite solid electrolyte may further include a third solid electrolyte including a compound represented by Formula 1. The third solid electrolyte may be disposed adjacent to a cathode.

$$\text{Formula 1} \qquad Li_{1+x+2y}Al_xMg_yM1_{2-x-y}(PO_4)_3$$

wherein, in Formula 1,

M1 may be germanium (Ge), zirconium (Zr), hafnium (Hf), tin (Sn), or a combination thereof; and

$$0<x<0.6 \text{ and } 0<y<0.2.$$

Examples of the third compound represented by Formula 1 include those described herein for the first compound represented by Formula 1.

The thirdsolid electrolyte may have a thickness of 1 $\mu$m to 30 $\mu$m, 3 $\mu$m to 25 $\mu$m, 5 $\mu$m to 22 $\mu$m, or 10 $\mu$m to 20 $\mu$m, for example.

The third solid electrolyte may be present in the composite solid electrolyte in an amount of 1 part by weight to 30 parts by weight, 1 part by weight to 20 parts by weight, or 5 parts by weight to 10 parts by weight, with respect to 100 parts by weight of a total weight of the composite solid electrolyte.

The compound of Formula 1 and the compound of Formula 2 may be prepared by a preparation method disclosed in Korean Patent Publication No. 2014-0015700.

Hereinbelow, a method of preparing a composite solid electrolyte according to one or more embodiments is described in further detail.

Compound of Formula 1, a binder, and a solvent may be mixed to form a first solid electrolyte forming composition.

Non-limiting examples of the binder may include an acrylic resin, an ethyl cellulose, a polyvinyl butyral, a methacrylate resin, a urethane resin, a butyl methacrylate, a vinyl copolymer, or the like, or a combination thereof. The amount of the binder in the first solid electrolyte forming composition may be from 1 part by weight to 30 parts by weight, or from 3 parts by weight to 10 parts by weight, with respect to 100 parts by weight of the first solid electrolyte forming composition. The first solid electrolyte forming composition may be in the form of a powder.

To the composition, a dispersing agent for improving dispersion of particles of each ingredient may be added in addition to the binder. In addition, additives may be added in an appropriate amount, such as a plasticizer and/or a surfactant for improving antifoaming properties.

For the dispersing agent, as a cationic dispersing agent, a phosphate-containing block copolymer, an acrylate copolymer, a polyurethane, or the like, or a combination thereof, may be used. The amount of the dispersing agent in the composition may be from 1 part by weight to 30 parts by weight, or from 3 parts by weight to 10 parts by weight, with respect to 100 parts by weight of the compound of Formula 1 as the first solid electrolyte.

Non-limiting examples of the plasticizer may include dibutyl phthalate, butylbenzyl phthalate, diethylhexyl adipate (DEHA), or the like, or a combination thereof. The amount of the plasticizer in the composition may be from 1 part by weight to 30 parts by weight, or from 3 parts by weight to 10 parts by weight, with respect to 100 parts by weight of the compound of Formula 1 as the first solid electrolyte.

By coating and drying the first solid electrolyte forming composition on a substrate, a first solid electrolyte may be prepared. The coating may be performed by a method such as a comma coating method, a blade coating method, a roll coating method, a die coating method, or the like, but is not limited to the aforementioned methods.

Non-limiting examples of the solvent may include alcohols such as methanol and/or ethanol, PGME (propylene glycol methyl ether), PGMEA (propylene glycol methyl ethyl acetate), MEK (methyl ethyl ketone), MIBK (methyl isobutyl ketone), toluene, terpineol, DMF, DMSO, or a combination thereof.

A green sheet may be used for preparation of the first solid electrolyte described above. Use of the green sheet may produce a solid electrolyte with a superior degree of densification.

The first solid electrolyte forming composition may be formed into a green sheet by a coating method using a doctor blade, a roll coater, a die coater, or the like, but embodiments are not limited thereto. The green sheet may be processed into a desired shape, and then compressed and heat-treated, followed by removal of organic components therefrom.

The coating and drying of the first solid electrolyte forming composition described above may be performed repeatedly so as to obtain a desired thickness of the first solid electrolyte.

The second solid electrolyte may be prepared following a similar or the same process as the first solid electrolyte, except that the compound of Formula 2 is used instead of the compound of Formula 1.

The first solid electrolyte and the second solid electrolyte, prepared according to the above process, may be stacked, and pressed to produce a stack. Here, the first solid electrolyte and the second solid electrolyte may each have multiple layers to achieve a desired thickness.

Then, the organic components may be removed by a first heat-treatment at a temperature of 500°C or less, for example, at a temperature of 250°C to 450°C, 280°C to 400°C, or 300°C to 400°C. Subsequently, a second heat-treatment may be performed on the product of the first heat-treatment at a temperature of less than 800°C to thereby produce a solid electrolyte. The second heat-treatment may be performed at a temperature of more than 600°C to less than 800°C, for example, at a temperature of 650°C to 790°C, 700°C to 780°C, or 700°C to 750°C. A composite solid electrolyte obtained from the above process may have excellent degree of densification and improved ionic conductivity.

As used herein, the term "heat-treatment" is synonymous with "heat-treating."

According to another aspect, provided is a secondary battery including an anode, a cathode, and a solid electrolyte positioned between the anode and the cathode, wherein at least one from among the cathode, the anode, and the solid electrolyte may include the above-described composite solid electrolyte.

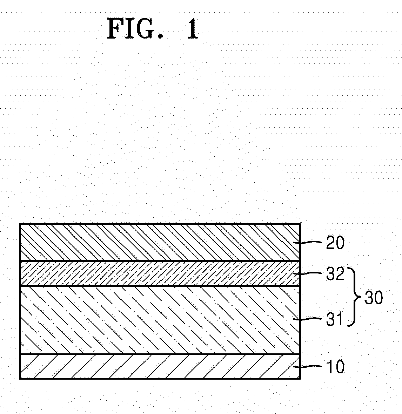

Referring to FIG. 1, the secondary battery may have a structure in which a first solid electrolyte 31 and a second solid electrolyte 32 are sequentially stacked on an anode 10, and a cathode 20 is formed on the second solid electrolyte 32.

A secondary battery according to one or more embodiments may be a battery having an oxide solid electrolyte, such as a lithium secondary battery or an all-solid battery.

According to another aspect, a method of preparing a secondary battery includes:

preparing a battery laminate by stacking an anode, a composite solid electrolyte, and a cathode, wherein the composite solid electrolyte includes a first solid electrolyte including a first compound represented by Formula 1, and a second solid electrolyte including a second compound represented by Formula 2; and heat-treating the battery laminate at a temperature of less than 800°C, wherein the first solid electrolyte is disposed adjacent to the anode:

Formula 1 $\quad$ $Li_{1+x+2y}Al_xMg_yM1_{2-x-y}(PO_4)_3$

wherein, in Formula 1,
M is germanium (Ge), zirconium (Zr), hafnium (Hf), tin (Sn), or a combination thereof, and

$$0<x<0.6 \text{ and } 0<y<0.2,$$

Formula 2 $\quad$ $Li_{1+x+2y}Al_xMg_yM2_{2-x-y}(PO_4)_3$ wherein, in Formula 2,

M is titanium (Ti), germanium (Ge), zirconium (Zr), hafnium (Hf), tin (Sn), or a combination thereof, and

$$0<x<0.6 \text{ and } 0\leq y<0.2.$$

For the heat-treatment of the battery laminate, the heat-treating may be at a temperature of less than 800°C, from 700 °C to less than 800°C, from 700°C to 780°C, or from 700°C to 750°C. The heat-treating of the battery laminate may be conducted under an inert gas atmosphere. The inert gas atmosphere may be created using an inert gas, such as nitrogen, argon, and/or helium, for example. In addition, 1% to 20% of hydrogen may be mixed with the inert gas for a reducing atmosphere. Depending on the purpose, the inert gas may be mixed with oxygen prior to use. Here, the heat-treating may refer to sintering. Sintering may transform the heat-treated product to a state in which the product has different physical properties from those of starting materials prior to the heat-treating.

When the battery laminate is heat-treated simultaneously in the above temperature ranges, a secondary battery having excellent cell performance may be prepared without a deterioration in the performance of an anode and a cathode. Heat-treating the battery laminate at a temperature of 800°C or greater may deteriorate the characteristics of other elements constituting the battery laminate, such as a cathode and an anode, thus causing interfacial characteristics between the respective elements to become poor, and as a result, the cell performance of a secondary battery may deteriorate.

In a linear scan voltammetry analysis of a secondary battery according to one or more embodiments, a reduction peak obtained in a condition of a voltage change to open circuit voltage (OCV) to 0.1 V does not appear between 2 V to 2.5 V. From this result, it follows that a composite solid electrolyte according to one or more embodiments has excellent reduction stability with anode materials.

In the linear scan voltammetry analysis, the current values obtained from a reaction while varying a voltage at a rate of 0.1 millivolts per second (mV/sec) from a OCV to 0.1 V condition were measured.

An all-solid battery according to one or more embodiments may be, for example, a multi-layer-ceramic (MLC) battery.

The MLC battery may include a laminated structure in which a plurality of unit cells is stacked such that a cathode active material layer and an anode active material layer are facing each other, wherein each unit cell has a cathode layer including a cathode active material layer; a solid electrolyte layer; and an anode layer including an anode active material layer. The MLC battery may include unit cells arranged continuously in this order.

According to another embodiment, the MLC battery may further include a cathode current collector and/or an anode current collector. When the MLC battery includes a cathode current collector, a cathode active material layer may be disposed on both sides of the cathode current collector. When the MLC battery includes an anode current collector, an anode active material layer may be disposed on both sides of the anode current collector.

The MLC battery may be provided with a laminated body in which a plurality of unit cells are laminated such that a cathode active material layer and an anode active material layer face each other between the unit cells, wherein each unit cell has a cathode active material layer, a solid electrolyte layer, and an anode active material layer. The unit cells may be arranged continuously in this order.

According to one or more embodiments, a unit cell may be stacked by providing a current collector layer on any one or both of the uppermost layer and the lowermost layer of the laminated body, or by inserting a metal layer into the laminated body.

A cathode active material and a secondary battery according to one or more embodiments may be used in a power source for Internal of Things (IoT) applications, a power source for a wearable device, or the like, but embodiments are not limited thereto.

A composite solid electrolyte according to one or more embodiments may be applicable to a thin-film battery and/or an MLC battery. The composite solid electrolyte may also be applied to small-sized batteries, and large-sized batteries such as electric vehicles (EVs) and energy storage systems (ESSs).

The secondary battery may be an all-solid secondary battery including a cathode layer including a cathode active material layer, and an anode layer including an anode current collector and a first anode active material layer; and a solid electrolyte layer disposed between the cathode layer and the anode layer, wherein at least one of the cathode layer, the anode layer, and the solid electrolyte layer may contain a composite solid electrolyte according to one or more embodiments.

A solid electrolyte layer of the all-solid secondary battery may contain a composite solid electrolyte according to one or more embodiments.

The anode layer may be an oxide anode layer.

The cathode active material layer may utilize any suitable cathode active material generally used in a secondary battery. The cathode active material may be, for example, a lithium transition metal oxide, a transition metal sulfide, or the like, or a combination thereof.

For example, the cathode active material may be at least one of a composite oxide of lithium with a metal that is cobalt, manganese, nickel, or a combination thereof. Specifically, the cathode active material may use a compound represented by any one of the following formulas: $Li_aA_{1-b}R_bD_2$ (in the formula, $0.90 \leq a \leq 1.8$ and $0 \leq b \leq 0.5$); $Li_aE_{1-b}R_bO_{2-c}D_c$ (in the formula, $0.90 \leq a \leq 1.8$, $0 \leq b \leq 0.5$, and $0 \leq c \leq 0.05$); $LiE_{2-b}R_bO_{4-c}D_c$ (in the formula, $0 \leq b \leq 0.5$ and $0 \leq c \leq 0.05$); $Li_aNi_{1-b-c}CO_bR_cD_\alpha$ (in the formula, $0.90 \leq a \leq 1.8$, $0 \leq b \leq 0.5$, $0 \leq c \leq 0.05$, and $0 < \alpha \leq 2$); $Li_aNi_{1-b-c}Co_bR_cO_{2-\alpha}X_\alpha$ (in the formula, $0.90 \leq a \leq 1.8$, $0 \leq b \leq 0.5$, $0 \leq c \leq 0.05$, and $0 < \alpha < 2$); $Li_aNi_{1-b-c}Co_bR_cO_{2-\alpha}X_2$ (in the formula, $0.90 \leq a \leq 1.8$, $0 \leq b \leq 0.5$, $0 \leq c \leq 0.05$, and $0 < \alpha < 2$); $Li_aNi_{1-b-c}Mn_bR_cD_\alpha$ (in the formula, $0.90 \leq a \leq 1.8$, $0 \leq b \leq 0.5$, $0 \leq c \leq 0.05$, and $0 < \alpha \leq 2$); $Li_aNi_{1-b-c}Mn_bR_cO_{2-\alpha}X_\alpha$ (in the formula, $0.90 \leq a \leq 1.8$, $0 \leq b \leq 0.5$, $0 \leq c \leq 0.05$, and $0 < \alpha < 2$); $Li_aNi_{1-b-c}Mn_bR_cO_{2-\alpha}X_2$ (in the formula, $0.90 \leq a \leq 1.8$, $0 \leq b \leq 0.5$, $0 \leq c \leq 0.05$, and $0 < \alpha < 2$); $Li_aNi_bE_cG_dO_2$ (in the formula, $0.90 \leq a \leq 1.8$, $0 \leq b \leq 0.9$, $0 \leq c \leq 0.5$, and $0.001 \leq d \leq 0.1$); $Li_aNi_bCo_cMn_dGeO_2$ (in the formula, $0.90 \leq a \leq 1.8$, $0 \leq b \leq 0.9$, $0 \leq c \leq 0.5$, $0 \leq d \leq 0.5$, and $0.001 \leq e \leq 0.1$); $Li_aNiG_bO_2$ (in the formula, $0.90 \leq a \leq 1.8$ and $0.001 \leq b \leq 0.1$); $Li_aCoG_bO_2$ (in the formula, $0.90 \leq a \leq 1.8$ and $0.001 \leq b \leq 0.1$); $Li_aMnG_bO_2$ (in the formula, $0.90 \leq a \leq 1.8$ and $0.001 \leq b \leq 0.1$); $Li_aMn_2G_bO_4$ (in the formula, $0.90 \leq a \leq 1.8$ and $0.001 \leq b \leq 0.1$); $QO_2$; $QS_2$; $LiQS_2$; $V_2O_5$; $LiV_2O_2$; $LiZO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); $LiFePO_4$, or a combination thereof.

In the formulas above, A may be nickel (Ni), cobalt (Co), manganese (Mn), or a combination of two or more thereof; R may be aluminum (Al), nickel (Ni), cobalt (Co), manganese (Mn), chromium (Cr), iron (Fe), magnesium (Mg), strontium (Sr), vanadium (V), a rare earth element, or a combination of two or more thereof; D may be oxygen (O), fluorine (F), sulfur (S), phosphorus (P), or a combination of two or more thereof; E may be cobalt (Co), manganese (Mn), or a combination of two or more thereof; X may be fluorine (F), sulfur (S), phosphorus (P), or a combination of two or more thereof; G may be aluminum (Al), chromium (Cr), manganese (Mn), iron (Fe), magnesium (Mg), lanthanum (La), cerium (Ce), strontium (Sr), vanadium (V), or a combination of two or more thereof; Q may be titanium (Ti), molybdenum (Mo), manganese (Mn), or a combination of two or more thereof; Z may be chromium (Cr), vanadium (V), iron (Fe), scandium (Sc), yttrium (Y), or a combination of two or more thereof; J may be vanadium (V), chromium (Cr), manganese (Mn), cobalt (Co), nickel (Ni), copper (Cu), or a combination of two or more thereof.

For example, the cathode active material may include a lithium compound that is $LiCoO_2$, $LiNiO_2$, $LiMnO_2$, $LiMn_2O_4$, $LiCuO_2$, $LiCoVO_4$, $LiMnCoO_4$, $LiCoPO_4$, $LiFePO_4$, or a combination thereof; the anode active material may include a lithium compound that is $Li_{4/3}Ti_{5/3}O_4$, $LiTiO_2$, $LiM1_sM2_tO_u$ (wherein M1 and M2 are each a transition metal, and s, t, and u are each any positive number), or a combination thereof; and the ion conductive inorganic material may include a lithium compound that is $Li_{3.25}Al_{0.25}SiO_4$, $Li_3PO_4$, $LiP_xSi_yO_z$ (in the formula, x, y and z are each any positive number), or a combination thereof.

The cathode active material may utilize a lithium-containing phosphate compound having a NASICON-type structure, such as $Li_3V_2(PO_4)_3$, $LiFePO_4$, $LiMnPO_4$, or the like, or a combination thereof; a lithium-containing phosphate compound having an olivine-type structure, or a combination thereof. In addition, a layered compound such as $LiCoO_2$, $LiCo_{1/3}Ni_{1/3}Mn_{1/3}O_2$, or a combination thereof; a lithium-containing compound having a spinel-type structure such as $LiMn_2O_4$, $LiNi_{0.5}Mn_{1.5}O_4$, $Li_4Ti_5O_{12}$, or a combination thereof; a phosphate compound such as $LiFePO_4$, $LiMnPO_4$, or a combination; or a combination thereof may be utilized as a cathode active material ingredient.

The first anode active material layer may include at least one of a carbon-containing anode active material, or a metal anode active material or a metalloid anode active material.

The carbon-containing anode active material may include at least one of amorphous carbon or crystalline carbon, and the metal anode active material or the metalloid anode active material may include at least one of gold (Au), platinum (Pt), palladium (Pd), silicon (Si), silver (Ag), aluminum (Al), bismuth (Bi), tin (Sn), or zinc (Zn).

The anode layer may further include a second anode active material layer, which is positioned in at least one of between the anode current collector and the first anode active material layer, or between the solid electrolyte layer and the first anode active material layer, and the second anode active material layer may be a metal layer including lithium or a lithium alloy.

A secondary battery according to another embodiment may be an all-solid secondary battery including a cathode layer including a cathode active material layer, and an anode layer including an anode current collector and a third anode active material layer; and a solid electrolyte layer disposed between the cathode layer and the anode layer, wherein at least one of the cathode layer, the anode layer, and the solid electrolyte layer may contain a composite solid electrolyte according to one or more embodiments.

The third anode active material layer may be a metal layer including lithium or a lithium alloy. The metal layer may include lithium or a lithium alloy. Accordingly, the third anode active material layer, being a metal layer containing lithium, may serve as a lithium reservoir, for example. The lithium alloy may include, for example, a Li-Al alloy, a Li-Sn alloy, a Li-In alloy, a Li-Ag alloy, a Li-Au alloy, a Li-Zn alloy, a Li-Ge alloy, a Li-Si alloy, or the like, or a combination thereof, but is not limited thereto and may be any suitable material available as a lithium alloy in the art. The third anode active material layer may be composed of one of such alloys, or lithium, or may be composed of various types of alloys.

A secondary battery according to one or more embodiments may be an extremely small-sized all-solid secondary battery.

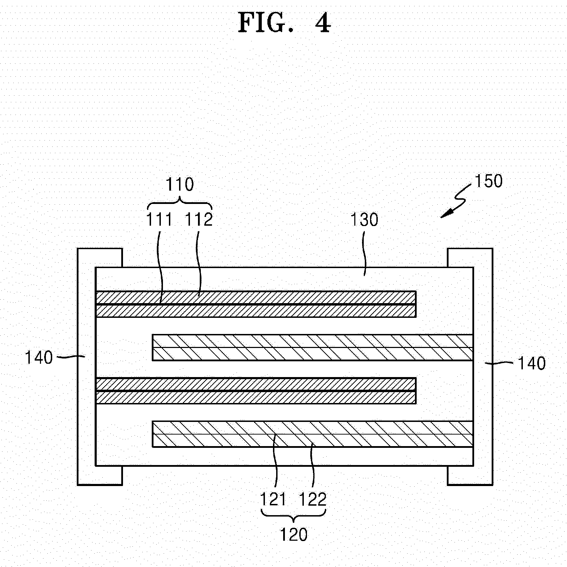

FIG. 4 schematically shows a structure of an MLC battery according to one or more embodiments.

Referring to FIG. 4, an MLC battery may be prepared by sequentially depositing an oxide electrode and a solid electrolyte, and then simultaneously heat-treating both the oxide electrode and the solid-state electrolyte. The solid electrolyte may be a composite solid electrolyte according to one or more embodiments.

Accordingly, a cathode 110 may be formed as a cathode active material layer 112 containing a cathode active material that is disposed on both sides of a cathode current collector 111. An anode active material layer 122 may be deposited on both sides of an anode current collector 121 to thereby form an anode 120. Then, as shown in FIG. 4, a solid electrolyte 130 may be arranged between the cathode 110 and the anode 120. Then, an external electrode 140 may be formed at both ends of a battery body 150. The external electrode 140 may be connected to the cathode 110 and the anode 120, each of which includes a tip (not shown) that is exposed outside of the battery body 150, and serve the role of an external terminal electrically connecting the cathode 110, the anode 120, and an external device. One end of any one of a pair of external electrodes 140 may be connected to the cathode 110 exposed outside of the battery body 150, and the other one of the pair of external electrodes 140 may have the other end thereof connected to the anode 120 exposed to the outside of the battery body 150.

A secondary battery according to one or more embodiments may be a multilayer solid battery including a first unit cell and a second unit cell, each including a cathode layer, a solid electrolyte layer, and an anode layer stacked sequentially in the stated order, and an internal current collector layer disposed between the first unit cell and the second unit cell by being in contact with respective cathode layers of the first unit cell and the second unit cell, or in contact with respective anode layers of the first unit cell and the second unit cell.

The anode active material of the anode active material layer may include a lithium compound that is $Li_{4/3}Ti_{5/3}O_4$, $LiTiO_2$, $LiM1_sM2_tO_u$ (wherein M1 and M2 are each independently a transition metal; and s, t, and u are each independently any positive number), $TiO_x$ (wherein $0<x\leq3$), $Li_xV_2(PO_4)_3$ (wherein $0<x\leq5$), or a combination thereof, and for example, may be $Li_{4/3}Ti_{5/3}O_4$, $LiTiO_2$, or a combination thereof.

The current collector layer, when acting as a cathode current collector or an anode current collector, may be formed of a metal that may be nickel (Ni), copper (Cu), silver (Ag), palladium (Pd), gold (Au), platinum (Pt), or a combination thereof, or may be formed of an alloy that includes nickel (Ni), copper (Cu), silver (Ag), palladium (Pd), gold (Au), platinum (Pt), or a combination thereof. The current collector layer, when formed of an alloy, may be an alloy of two or more of nickel (Ni), copper (Cu), silver (Ag), palladium (Pd), gold (Au), platinum (Pt), or a combination thereof, and may be, for example, an Ag/Pd alloy. In addition, these metals and/or alloys may be a single type, or a mixture of two or more types. The current collector layer as a cathode current collector and the current collector layer as an anode current collector may use the same material, or may use a different material from each other. For example, when using an alloy or mixed powder containing Ag and Pd, the melting point may be adjusted to any suitable melting point between the melting point of silver (962°C) and the melting point of palladium (1,550°C) by adjusting the mixing ratio, and therefore, the melting point may be adjusted to a batch firing temperature, and also, due to a high electron conductivity, battery internal resistance may be advantageously suppressed to a minimal level.

The metal layer may utilize the same material as the above-described current collector layer. The metal layer and the current collector layer may utilize the same material or a different material from each other.

The solid electrolyte may contain an ion-conducting inorganic material and may utilize, for example, an oxide-containing solid electrolyte.

For example, the oxide-containing solid electrolyte may be at least one of, or a combination of two or more of

$Li_{1+x+y}Al_xTi_{2-x}Si_yP_{3-y}O_{12}$ (wherein 0<x<2, 0≤y<3), $BaTiO_3$, $Pb(Zr,Ti)O_3$ (PZT), $Pb_{1-x}La_xZr_{1-y}Ti_yO_3$ (PLZT) (wherein 0≤x<1, 0≤y<1),$Pb(Mg_3Nb_{2/3})O_3-PbTiO_3$ (PMN-PT), $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $SiC$, $Li_3PO_4$, $Li_xTi_y(PO_4)_3$ (wherein 0<x<2 and 0<y<3), $Li_xAl_yTi_z(PO_4)_3$ (wherein 0<x<2, 0<y<1, 0<z<3), $Li_{1+x+y}(Al, Ga)_x(Ti, Ge)_{2-x}Si_yP_{3-y}O_{12}$ (wherein 0≤x≤1, and 0≤y≤1), $Li_xLa_yTiO_3$ (wherein 0<x<2, and 0<y<3), $Li_xGe_yP_zS_w$ (wherein 0<x<4, 0<y<1, 0<z<1, and 0<w<5), $Li_xN_y$ (wherein 0<x<4 and 0<y<2), $SiS_2$, $Li_xSi_yS_z$ (wherein 0<x<3, 0<y<2, and 0<z<4), $Li_xP_yS_z$ (wherein 0<x<3, 0<y<3, and 0<z<7), $Li_2O$, $LiF$, $LiOH$, $Li_2CO_3$, $LiAlO_2$, $Li_2O-Al_2O_3-SiO_2-P_2O_5-TiO_2-GeO_2$ type ceramics, garnet-type ceramics $Li_{3+x}La_3M_2O_{12}$ (wherein M is Te, Nb, or Zr; and x is an integer of 1 to 10).

The solid electrolyte may include a lithium compound that may be $Li_{3.25}Al_{0.25}SiO_4$, $Li_3PO_4$, $LiP_xSi_yO_z$ (in the formula, x, y, and z are each any positive number), or the like, or a combination thereof, but is not limited to the aforementioned components.

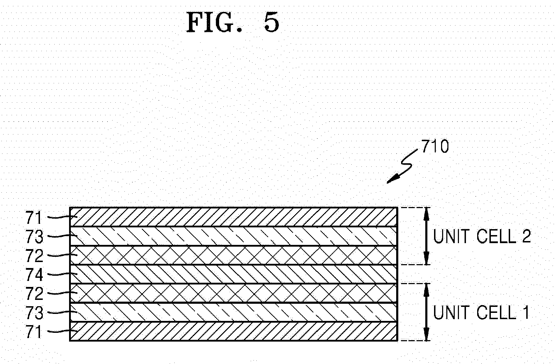

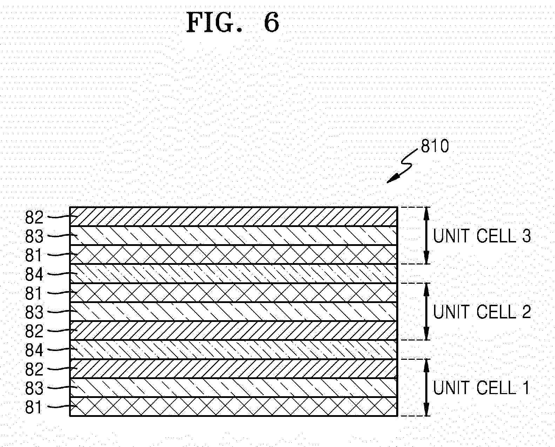

FIGS. 5 and 6 schematically show a cross-sectional structure of a multi-layer solid battery according to one or more embodiments.

As shown in FIG. 5, in a multi-layer ceramic battery 710, a first unit cell 1 and a second unit cell 2 may be stacked on both sides of an internal current collector layer 74. The first unit cell 1 and the second unit cell 2 may be each formed of a cathode layer 71, a solid electrolyte layer 73, and an anode layer 72, stacked sequentially in the stated order. The cathode layer 71 may contain a cathode active material according to one or more embodiments.

The first unit cell 1, the second unit cell 2, and the internal current collector layer 74 may be stacked such that the anode layer 72 of the second unit cell 2 is adjacent to one side of the internal current collector layer 74 (upper side in FIG. 5) and the anode layer 72 of the first unit cell 1 is adjacent to the other side of the internal current collector layer 74 (lower side in FIG. 5). Although the inner current collector layer 74, as illustrated in FIG. 5, may be positioned in contact with the anode layers 72 of each of the first unit cell 1 and the second unit cell 2, the inner current collector layer 74 may also be positioned so as to contact the cathode layers 71 of each of the first unit cell 1 and the second unit cell 2. The inner current collector layer 74 may include an electron-conducting material. The inner current collector layer 74 may further include an ion-conducting material. Further inclusion of an ion-conducting material may provide excellent voltage stabilization characteristics.

In the multi-layer solid battery 710 configured as above, the same electrode on both sides of the inner current collector layer 74 are disposed, and therefore, a monopolar multilayer solid battery 710 in which a plurality of unit cells may be connected in parallel by inserting the internal current collector layer 74 therebetween may be obtained. As a result, a high-capacity multilayer solid battery 710 may be obtained.

Since the inner current collector layer 74 inserted between the first unit cell 1 and the second unit cell 2 in the multilayer solid battery 710 contains an electron-conducting material, it is possible to electrically connect two adjacent unit cells in parallel, and at the same time, connect the cathode layers 71 or anode layers 72 in the two adjacent unit cells in an ionically conductive manner. Accordingly, electric potentials of adjacent anode layers 71 or cathode layers 72 may be averaged through the internal current collector layer 74, and a stable output voltage may be obtained as a result.

In addition, unit cells constituting the multilayer ceramic battery 10 may be electrically connected in parallel without external current collecting members, such as lead-tabs. Accordingly, the multilayer solid battery 710, which has excellent space efficiency and cost-effectiveness, may be obtained.

Referring to FIG. 6, a laminated body 810 may contain cathode layers 81, anode layers 82, solid electrolyte layers 83, and inner current collector layers 84. The laminated body may be stacked and thermally compressed to prepare a multilayer solid battery laminate 810. Here, the cathode layer 81 may be formed of a single cathode layer sheet, and the anode layer 82 may be formed of two anode layer sheets. The cathode layer 81 may contain a cathode active material according to one or more embodiments.

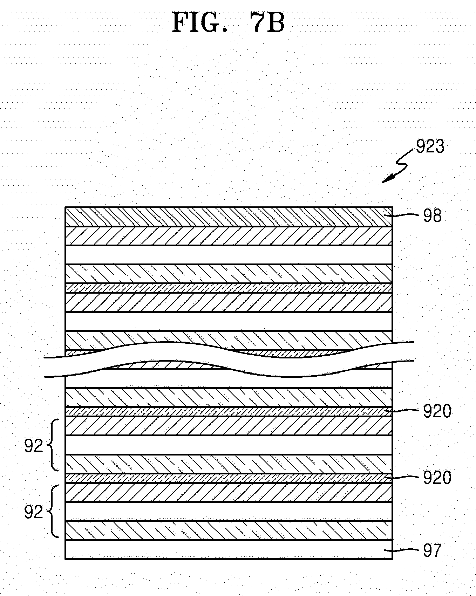

FIG. 7B shows a laminated body 923 of an all-solid secondary battery according to one or more embodiments.

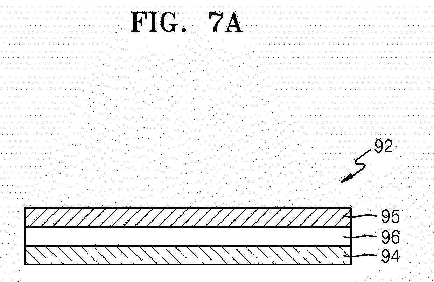

A cathode active material layer 94 in FIG. 7A and FIG. 7B may include a cathode active material, which is an electrode active material according to one or more embodiments.

Referring to FIG. 7A, a structure of a most basic unit cell 92 that constitutes an all-solid secondary battery is shown. The unit cell 92 may have a structure in which a cathode active material layer 94, an ion-conducting inorganic material layer 96, and an anode active material layer 95 are positioned in this stated order.

FIG. 7B shows a structure of a laminated body 923 forming an all-solid secondary battery according to another embodiment. The laminated body 923 includes unit cells 92 that each may have a structure in which a cathode active material layer 94, an ion-conducting inorganic material layer 96, and an anode active material layer 95 are positioned in this stated order, wherein the unit cells are continuously stacked.

On a lower end of an all-solid secondary battery, a cathode lead-electrode that contacts a cathode active material layer may be installed, and on an upper end of the all-solid secondary battery, an anode lead-electrode that contacts an anode active material layer may be installed. In the present specification, the upper end and the lower end indicate a relative position.

Referring to FIG. 7A and FIG. 7B, a stacked body 923 may have a structure in which a plurality of unit cells 92 are stacked such that a cathode active material layer 94 and an anode active material layer 95 are stacked to face each other with the ion conductive inorganic material layer 96 in the center, and a current collector layer 97,98 may be provided at the uppermost layer and the lowermost layer. Of the current collector layers 97,98 of the uppermost layer and the lowermost layer, one current collector layer 97 may be connected to a cathode active material layer 94 and become a cathode current collector, and the other current collector layer 98 may be connected to an anode active material layer 95 and become an anode current collector. In other words, a current collector layer 97 of the lowermost layer may be in contact with the cathode active material layer 94 and become a cathode current collector, and a current collector layer 98 of the uppermost layer may be in contact with the anode active material layer 95 and become an anode current collector.

In this mode, the current collector layer may act as a lead-electrode. In FIG. 7A, the current collector layer 97 of the lowermost layer may function as a cathode lead, and the current collector layer 98 of the uppermost layer may function as an anode lead-electrode. Alternatively, a lead-electrode may be separately installed on a current collector layer. For example, a cathode lead-electrode contacting the current collector layer 97 may be installed on the lower end of the stacked body, and an anode lead-electrode contacting the current collector layer 98 may be installed on the upper end of the stacked body.

As depicted in FIG. 7B, the stacked body 923 may have a structure in which unit cells 92 are stacked with a metal layer 920 placed therebetween. Insertion of a metal layer 920 allows ion migrations to stay only within an individual cell, thus ensuring that the all-solid secondary battery would function as a series-type all-solid secondary battery. The stacked body 923 in FIG. 7B is depicted as including current collector layers 97,98; however, the current collector layers may be optional as described above.

If the number of unit cells 92 is two or greater in a stacked body of an all-solid secondary battery, a series-connected all-solid secondary battery may be prepared. The number of unit cells may be freely varied based on a required capacity and/or voltage value of an all-solid secondary battery.

A secondary battery according to one or more embodiments may be an all-solid secondary battery.

Hereinbelow, an all-solid secondary battery according to one or more embodiments will be described in further detail with reference to the accompanied drawings.

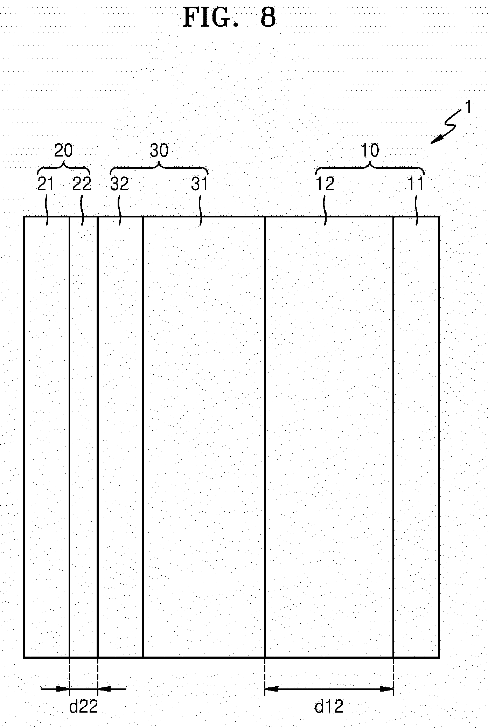

Referring to FIGS. 8 to 10, an all-solid secondary battery 1 contains an anode layer 20 including an anode current collector layer 21 and a first anode active material layer 22; a cathode layer 10 including a cathode current collector layer 11 and a cathode active material layer 12; and a solid electrolyte layer 30 arranged between the anode layer 20 and the cathode layer 10. The cathode layer 10 may contain a solid electrolyte.

The cathode active material layer 12, the anode active material layer 22, the solid electrolyte layer 30, or a combination thereof may contain a composite solid electrolyte according to one or more embodiments.

For example, the cathode layer 10 may contain the above-described cathode active material, a solid electrolyte, and a conductive material.

Anode Layer

Referring to FIGS. 8 to 10, the anode layer 20 includes the anode current collector layer 21 and the first anode active material layer 22, and the first anode active material layer 22 includes an anode active material. The anode current collector layer 21 may be omitted.

The anode active material included in the anode active material layer 22 may have, for example, a particle shape. The anode active material having a particle shape may have an average particle diameter of, for example, 4 $\mu$m or less, 3 $\mu$m or less, 2 $\mu$m or less, 1 $\mu$m or less, or 900 nanometer (nm) or less. The anode active material having a particle shape may have an average particle diameter of, for example, 10 nm to 4 $\mu$m, 10 nm to 2 $\mu$m, 10 nm to 1 $\mu$m, or 10 nm to 900 nm. The anode active material having an average particle diameter within the above ranges may facilitate reversible absorption and/or desorption of lithium during charging/discharging. The average particle diameter of the anode active material may be, for example, a median particle diameter (D50) as measured by a laser-type particle size distribution analyzer.

The anode active material included in the first anode active material layer 22 may include, for example, at least one of a carbonaceous anode active material, a metal anode active material, a metalloid anode active material, or a combination thereof.

The carbonaceous anode active material may be, for example, an amorphous carbon. Non-limiting examples of the amorphous carbon may include carbon black (CB), acetylene black (AB), furnace black (FB), Ketjen black (KB), graphene, or the like, or a combination thereof, but the amorphous carbon is not necessarily limited thereto and may be any suitable material classified as amorphous carbon in the art. Amorphous carbon is carbon with no crystalline structure or an extremely low degree of crystallinity, and, as such, can be distinguished from crystalline carbon or graphitic carbon.

The metal anode active material or the metalloid anode active material may include at least one of gold (Au), platinum (Pt), palladium (Pd), silicon (Si), silver (Ag), aluminum (Al), bismuth (Bi), tin (Sn), or zinc (Zn), but is not necessarily limited to the aforementioned materials. The metal anode active material or the metalloid anode active material may be any suitable metal anode active material or suitable metalloid anode active material available in the art that can form an alloy or a compound with lithium. For example, nickel (Ni) does not form an alloy with lithium and is therefore not regarded as a metal anode active material.

The first anode active material layer 22 may include one of such anode active materials, or may include a mixture or combination of multiple different anode active materials. For example, the first anode active material layer 22 may include amorphous carbon alone, or may include one or more of among gold (Au), platinum (Pt), palladium (Pd), silicon (Si), silver (Ag), aluminum (Al), bismuth (Bi), tin (Sn), or zinc (Zn). Alternatively, the first anode active material layer 22 may include a mixture of amorphous carbon with one or more of gold (Au), platinum (Pt), palladium (Pd), silicon (Si), silver (Ag), aluminum (Al), bismuth (Bi), tin (Sn), or zinc (Zn). A mixing ratio of amorphous carbon to the metal(s) described herein, such as gold (Au), in such a mixture may be 10:1 to 1:2, 5:1 to 1:1, or 4:1 to 2:1 in weight ratio, but without being necessarily limited thereto, may be selected according to required characteristics of an all-solid secondary battery 1. The anode active material having the above compositions may further improve cycle characteristics of the all-solid secondary battery 1.

The anode active material included in the first anode active material layer 22 may include, for example, a mixture of first particles composed of amorphous carbon, and second particles composed of a metal or a metalloid. Non-limiting examples of the metal or the metalloid may include one or more of gold (Au), platinum (Pt), palladium (Pd), silicon (Si), silver (Ag), aluminum (Al), bismuth (Bi), tin (Sn), zinc (Zn), or the like. In some embodiments, the metalloid may be a semiconductor. The amount of the second particle may be from 8 wt% to 60 wt%, from 10 wt% to 50 wt%, from 15 wt% to 40 wt%, or from 20 wt% to 30 wt%, with respect to the total weight of the mixture. Including the second particles in an amount in the above ranges may further improve cycle characteristics of the all-solid secondary battery 1.

The first anode active material layer 22 may include, for example, a binder. Non-limiting examples of the binder may include styrene butadiene rubber (SBR), polytetrafluoroethylene (PTFE), polyvinylidene fluoride (PTFE), polyethylene, a vinylidene fluoride/hexafluoropropylene copolymer, polyacrylonitrile, polymethylmethacrylate, or the like, or a combination thereof. However, the binder is not necessarily limited to the aforementioned materials and may be any suitable material available as a binder in the art. The binder may be composed of a single type of binder, or multiple different types of binders.

Inclusion of a binder in the first anode active material layer 22 may achieve stabilization of the first anode active material layer 22 on the anode current collector 21. In addition, cracking in the first anode active material layer 22 may be inhibited despite volume changes and/or displacement of the first anode active material layer 22 during the charging/discharging processes. For example, when the first anode active material layer 22 does not contain any binder, the first anode active material layer 22 may easily separate from the anode current collector 21. In the portion of the first anode active material layer 22 separated from the anode current collector 21, the anode current collector 21 may be exposed and contact the solid electrolyte layer 30, thus increasing the likelihood of a short-circuit.

For example, the first anode active material layer 22 may be prepared by applying and drying a slurry having dispersed therein materials for forming the first anode active material layer 22 on the anode current collector 21. By inclusion of a binder in the first anode active material layer 22, stable dispersions of anode active materials within the slurry may be achieved. For example, when applying the slurry onto the anode current collector 21 by a screen-printing method, it may be possible to prevent the screen from clogging (for example, clogging by aggregates of the anode active material).

A thickness d22 of the first anode active material layer may be, for example, 50% or less, 30% or less, 10% or less, or 5% or less with respect to a thickness d12 of the cathode active material layer. The thickness d22 of the first anode active material layer may be, for example, from 1 μm to 20 μm, from 2 μm to 10 μm, or from 3 μm to 7 μm. When the thickness d22 of the first anode active material layer is within the above ranges, excellent cycle characteristics of the all-solid secondary battery may be achieved.

The charging capacity of the first anode active material layer 22 may be, for example, 50% or less, 40% or less, 30% or less, 20% or less, 10% or less, 5% or less, or 2% or less, with respect to the charging capacity of the cathode active material layer 12. The charging capacity of the first anode active material layer 22 may be, for example, 0.1% to 50%, 0.1% to 40%, 0.1% to 30%, 0.1% to 20%, 0.1% to 10%, 0.1% to 5%, or 0.1% to 2%, with respect to the charging capacity of the cathode active material layer 12. When the charging capacity of the first anode active material layer 22 is within the above ranges, excellent cycle characteristics of the all-solid secondary battery 1 may be achieved. The charging capacity of the cathode active material layer 12 may be obtained by multiplying the charging capacity density (mAh/g) of the cathode active material by the mass of the cathode active material in the cathode active material layer 12. The charging capacity of the anode active material layer 22 may be obtained by multiplying the charging capacity density (mAh/g) of the anode active material by the mass of the anode active material in the anode active material layer 22. The anode current collector 21 may be formed of a material that does not react with lithium, that is, does not form an alloy or a compound with lithium. Non-limiting examples of the material forming the anode current collector 21 may include copper (Cu), stainless steel, titanium (Ti), iron (Fe), cobalt (Co), nickel (Ni), or the like, or a combination thereof. However, the material for forming the anode current collector 21 is not necessarily limited to the aforementioned materials but may be any suitable material available as an electrode current collector in the art. The anode current collector 21 may be formed of one of the aforementioned metals, an alloy of two or more metals thereof, or a coating material. The anode current collector 21 may be, for example, a plate shape or a foil shape.

The first anode active material layer 22 may further include an additive used for a conventional all-solid secondary battery 1, such as a filler, a dispersing agent, an ion-conducting agent, or the like, or a combination thereof.

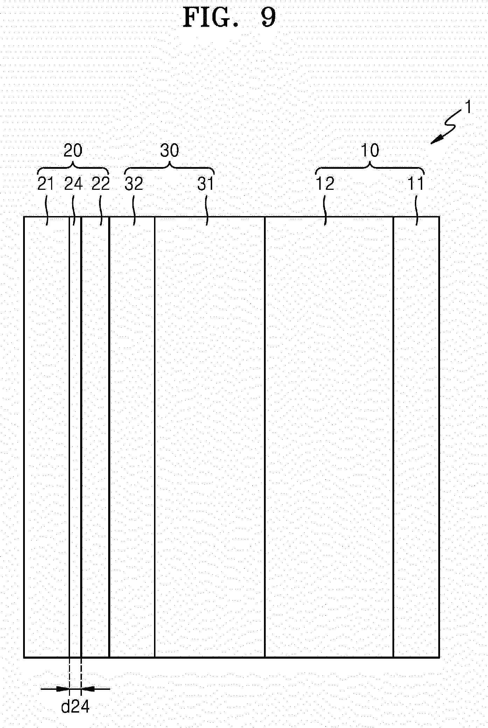

Referring to FIG. 9, the all-solid secondary battery 1 may further include, for example, a thin film 24 containing an element capable of forming an alloy with lithium on an anode current collector 21. The thin film 24 may be positioned between the anode current collector 21 and the first anode active material layer 22. The thin film 24 may include, for example, an element capable of forming an alloy with lithium. The element capable of forming an alloy with lithium may be, for example, gold (Au), silver (Ag), zinc (Zn), tin (Sn), indium (In), silicon (Si), aluminum (Al), bismuth (Bi), or the like, or a combination thereof, but is not necessarily limited thereto and may be any suitable element in the art that can form an alloy with lithium. The thin film 24 may be composed of one of the aforementioned metals or may be composed of an alloy of various different kinds of metals. Disposition of the thin film 24 on the anode current collector 21 may allow the precipitation formed of a second anode active material layer (not illustrated) precipitated between the thin film 24 and the first anode active material layer 22 to be further flattened, and may further improve cycling characteristics of an all-solid secondary battery 1.

The thickness d24 of the thin film 24 may be, for example, from 1 nm to 800 nm, 10 nm to 700 nm, 50 nm to 600 nm, or 100 nm to 500 nm. When the thin film has a thickness in the above ranges, the all-solid battery may achieve excellent energy density and cycling characteristics. The thin film 24 may be positioned on the anode current collectors 21 by a vacuum deposition method, a sputtering method, a plating method, or the like, but is not limited to the aforementioned methods and may be any suitable method available in the art that is capable of forming the thin film 24.

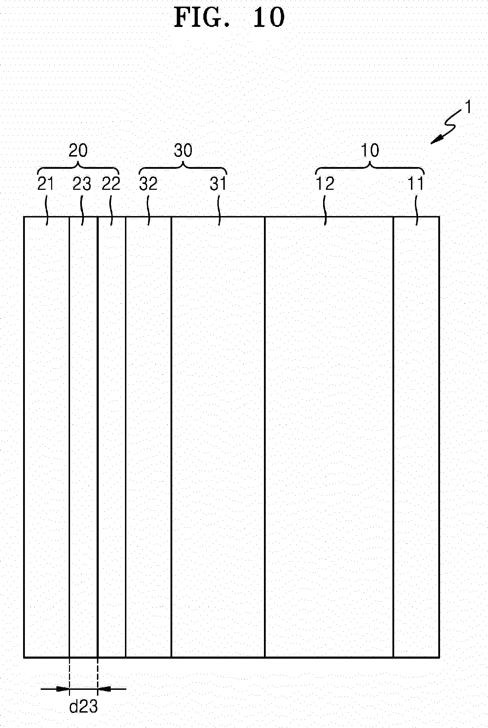

Referring to FIG. 10, an all-solid secondary battery 1 may further include, for example, a second anode active material layer 23 positioned between an anode current collector 21 and a solid electrolyte layer 30 by charging. The all-solid secondary battery 1 may further include, for example, the second anode active material layer 23 positioned between the anode current collector 21 and the first anode active material layer 22 by charging. Although not illustrated in the drawings, the all-solid secondary battery 1 may further include, for example, the second anode active material layer 23 positioned between the solid electrolyte layer 30 and the first anode active material layer 22 by charging. Although not illustrated in the drawings, the all-solid secondary battery 1 may further include, for example, the second anode active material layer 23 positioned in the first anode active material layer 22 by charging.

The second anode active material layer 23 may be a metal layer including lithium or a lithium alloy. The metal layer may include lithium or a lithium alloy. Accordingly, the second anode active material layer 23, being a metal layer containing lithium, and may serve as a lithium reservoir, for example. The lithium alloy may include, for example, a Li-Al alloy, a Li-Sn alloy, a Li-In alloy, a Li-Ag alloy, a Li-Au alloy, a Li-Zn alloy, a Li-Ge alloy, a Li-Si alloy, or the like, or a combination thereof, but is not limited thereto and may be any suitable material available as a lithium alloy in the art. The second anode active material layer 23 may be composed of one of such alloys, or lithium, or may be composed of various types of different alloys.

Thickness d23 of the second anode active material layer is not particularly limited but may be, for example, from 1 $\mu$m to 1,000 $\mu$m, from 1 $\mu$m to 500 $\mu$m, from 1 $\mu$m to 200 $\mu$m, from 1 $\mu$m to 150 $\mu$m, from 1 $\mu$m to 100 $\mu$m, or from 1 $\mu$m to 50 $\mu$m. When the thickness d23 of the second anode active material layer is within the above ranges, excellent cycling characteristics of the all-solid secondary battery may be achieved. The second anode active material layer 23 may be, for example, a metal foil having a thickness in the above ranges.

In the all-solid secondary battery 1, the second anode active material layer 23 may be, for example, positioned between the anode current collector 21 and the first anode active material layer 22 before assembly of the all solid secondary battery 1, or precipitated between the anode current collector 21 and the first anode active material layer 22 by charging after assembly of the all solid secondary battery 1.

In a case in which the second anode active material layer 23 is positioned between the anode current collector 21 and the first anode active material layer 22 prior to assembly of the all solid secondary battery 1, the second anode active material layer 23 may be a metal layer containing lithium, and thus acts as a lithium reservoir. The cycling characteristics of the all-solid secondary battery 1 including the second anode active material layer 23 may be further improved. For example, prior to assembly of the all-solid secondary battery 1, a lithium foil may be positioned between the anode current collector 21 and the first anode active material layer 22.

In a case in which the second anode active material layer 23 is positioned by charging after assembly of the all-solid secondary battery 1, since the second anode active material layer 23 is not included at the time of assembly of the all-solid secondary battery 1, the energy density of the all-solid secondary battery 1 may increase. For example, when charging the all-solid secondary battery 1, the all-solid secondary battery 1 may be charged exceeding the charging capacity of the first anode active material layer 22. That is, the first anode active material layer 22 may be overcharged. At the beginning of the charging, lithium may be absorbed into the first anode active material layer 22. That is, the anode active material included in the first anode active material layer 22 may form an alloy or a compound with lithium ions that have migrated from the cathode layer 10. When the charging is performed exceeding the capacity of the first anode active material layer 22, lithium may be precipitated, for example, on the back surface of the first anode active material layer 22, that is, between the anode current collector 21 and the first anode active material layer 22, and the precipitated lithium then may form a metal layer that corresponds to the second anode active material layer 23. The second anode active material layer 23 may be a metal layer mainly composed of lithium (i.e., metal lithium). This result can be attributed to the fact that the anode active material included in the first anode active material layer 22 may be composed of a material that forms an alloy or compound with lithium. During discharge, the lithium in metal layers, that is, in the first anode active material layer 22 and the second anode active material layer 23, may be ionized and migrate toward the cathode layer 10. Accordingly, in the all-solid secondary battery 1, lithium may be used as the anode active material. In addition, the first anode active material layer 22 covers the second anode active material layer 23, and as such, may function as a protective layer for the metal layer, that is, the second anode active material layer 23 may inhibit the precipitation and growth of lithium dendrites. Accordingly, short circuits and capacity fading in the all-solid secondary battery 1 may be inhibited, and consequently, cycling characteristics of the all-solid secondary battery 1 may be improved. In addition, if the second anode active material layer 23 is to be disposed by charging after assembly of the solid-state secondary battery 1, the anode current collector 21, the first anode active material layer 22, and the area therebetween may be, for example, a Li-free region not containing Li metal or Li alloys in the initial state or discharged state of the all solid secondary battery.

Referring to FIG. 10, the all solid secondary battery 1 may have a structure in which the second anode active material layer 23 may be disposed on the anode current collector 21, and the solid electrolyte layer 30 is directly disposed on the first anode active material layer 22. The second anode active material layer 23 may be, for example, a lithium metal layer or a lithium alloy layer.

Solid Electrolyte Layer

Referring to FIGS. 8 to 10, the solid electrolyte layer 30 may contain an oxide-containing solid electrolyte.

The oxide-containing solid-state electrolyte may be, for example, at least one of $Li_{1+x+y}Al_xTi_{2-x}Si_yP_{3-y}O_{12}$ (wherein $0<x<2$ and $0\leq y<3$), $BaTiO_3$, $Pb(Zr,Ti)O_3$ (PZT), $Pb_{1-x}La_xZr_{1-y}Ti_yO_3$ (PLZT) (wherein $0\leq x<1$ and $0\leq y<1$), $PB(Mg_3Nb_{2/3})O_3$-$PbTiO_3$ (PMN-PT), $HfO_2$, $SrTiO_s$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ (wherein $0<x<2$ and $0<y<3$), $Li_xAl_yTi_z(PO_4)_3$ (wherein $0<x<2$, $0<y<1$, and $0<z<3$), $Li_{1+x+y}(Al, Ga)_x(Ti, Ge)_{2-x}Si_yP_{3-y}O_{12}$ (wherein $0\leq x\leq 1$ and $0\leq y\leq 1$), $Li_xLa_yTiO_3$ (wherein $0<x<2$ and $0<y<3$), $Li_2O$, $LiOH$, $Li_2CO_3$, $LiAlO_2$, $Li_2O$-$Al_2O_3$-$SiO_2$-$P_2O_5$-$TiO_2$-$GeO_2$, or $Li_{3+x}La_3M_2O_{12}$ (wherein M is Te, Nb, or Zr, and x is an integer of 1 to 10).

For example, the oxide-containing solid-state electrolyte may be a garnet-type solid electrolyte that is $Li_7La_3Zr_2O_{12}$ (LLZO), $Li_{3+x}La_3Zr_{2-a}M_aO_{12}$ (M doped LLZO, wherein M is Ga, W, Nb, Ta, or Al, x is an integer of 1 to 10, $0.05\leq a\leq 0.7$), or a combination thereof.

According to one or more embodiments, the solid electrolyte layer may include an LLZO solid electrolyte.

For example, the solid electrolyte layer may include $Li_7La_3Zr_2O_{12}$ (LLZO), $Li_{6.4}La_3Zr_{1.7}W_{0.3}O_{12}$, $Li_{6.5}La_3Zr_{1.5}Ta_{0.3}O_{12}$, $Li_7La_3Zr_{1.7}W_{0.3}O_{12}$, $Li_{4.9}La_{2.5}Ca_{0.5}Zr_{1.7}Nb_{0.3}O_{12}$, $Li_{4.9}Ga_{2.1}La_3Zr_{1.7}W_{0.3}O_{12}$, $Li_{6.4}La_3Zr_{1.7}W_{0.3}O_{12}$, $Li_7La_3Zr_{1.5}W_{0.5}O_{12}$, $Li_7La_{2.75}Ca_{0.25}Zr_{1.75}Nb_{0.25}O_{12}$, $Li_7La_3Zr_{1.5}Nb_{0.5}O_{12}$, $Li_7La_3Zr_{1.5}Ta_{0.5}O_{12}$, $Li_{6.272}La_3Zr_{1.7}W_{0.3}O_{12}$, $Li_{5.39}Ga_{1.61}La_3Zr_{1.7}W_{0.3}O_{12}$, $Li_{6.5}La_3Zr_{1.5}Ta_{0.3}O_{12}$, or a combination thereof.

Cathode Layer

A cathode layer 10 may include a cathode current collector 11 and a cathode active material layer 12.

For example, the cathode current collector 11 may utilize a plate, a foil, or the like, composed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), an alloy thereof, or a combination thereof. The cathode current collector 11 may be omitted.

The cathode active material layer 12 may contain a cathode active material and a solid electrolyte. The solid electrolyte included in the cathode layer 10 may be similar to or different from a solid electrolyte included in the solid electrolyte layer 30. Details on the solid electrolyte may be found in the description of the solid electrolyte layer 30. According to one or more embodiments, the solid electrolyte may contain a composite solid electrolyte according to one or more embodiments. In addition, the solid electrolyte may further include a general oxide-containing solid electrolyte.

Here, the shape of the cathode active material contained in the cathode layer may be, for example, a particle shape such as a perfect spherical shape, an elliptical spherical shape, or the like, but embodiments are not limited thereto. In addition, the particle diameter of the cathode active material is not particularly limited, but may be in a range applicable to a cathode active material in conventional all-solid secondary batteries in the art. In addition, an amount of the cathode active material contained in the cathode layer 10 is not particularly limited, but may be in a range applicable to a cathode layer in conventional all-solid secondary batteries in the art.

In addition to the above-described cathode active material and the solid electrolyte, the cathode 10 may optionally further include other additives such as a conductive material, a binder, a filler, a dispersing agent, an ion conductivity aid, or the like, or a combination thereof. Non-limiting examples of the conductive material may include graphite, carbon black (CB), acetylene black (AB), Ketjen black (KB), furnace black (FB), carbon fibers, a metal powder, or the like, or a combination thereof. Non-limiting examples of the binder may include styrene butadiene rubber (SBR), polytetrafluoroethylene, polyvinylidene fluoride, polyethylene, or the like, or a combination thereof. For components such as a coating agent, a dispersing agent, and an ion conductivity aid that can be blended in the cathode layer 10, any suitable material used in an electrode of a solid-state secondary battery may be used.

A method of preparing an all-solid secondary battery may include stacking a solid electrolyte layer 30 on a cathode layer 10, and stacking an anode layer 20 thereon.

According to another embodiment, the solid electrolyte layer 30 may be prepared by having a solid electrolyte layer forming composition coated and dried on a separate substrate, and then separating the resulting layer from the substrate or forming the resulting layer as a sheet with the substrate included therein. Non-limiting examples of the substrate may include a polyethylene terephthalate film, a polyethylene non-woven fabric, or the like, or a combination thereof.

According to another embodiment, the solid electrolyte layer 30 may be prepared by having a first solid electrolyte layer forming composition coated and dried on, or transferred onto, the cathode layer 10.

Subsequently, the cathode layer 10, the solid electrolyte layer 30, and the anode layer 20 may be packaged with a packing material and pressed, thereby completing the preparation of an all-solid battery. The pressing may be carried out by a roll press, a hot press, a warm isostatic press, or the like, or a combination thereof.

Use of a roll press or a hot press for the pressing allows a large-batch production and may form a dense interface during the compaction of an electrode layer and a solid electrolyte layer.

Preparation of Anode Layer

A slurry may be prepared by adding, to a polar solvent or a nonpolar solvent, materials constituting a first anode active material layer 22, such as an anode active material, a conductive material, a binder, a solid electrolyte, or the like, or a combination thereof. The prepared slurry may be coated and dried on an anode current collector 21 to form a first laminated body. Then, the dried first laminated body may be pressed, thereby forming an anode layer 20. The pressing may be conducted by a method using a roll press, a flat press, or the like, but without being limited thereto, the pressing may be conducted by any suitable press available in the art. The pressing process may be omitted.

The anode layer 20 may include an anode current collector 21 and a first anode active material layer 22 positioned on the anode current collector 21 and containing an anode active material, the anode active material may include one or more selected from a carbon-containing anode active material and a metal anode active material or a metalloid anode active material, and the carbon-containing anode active material may include at least one of an amorphous carbon or a crystalline carbon. In particular, the metal anode active material or the metalloid anode active material may be at least one of gold (Au), platinum (Pt), palladium (Pd), silicon (Si), silver (Ag), aluminum (Al), bismuth (Bi), tin (Sn), or zinc (Zn).

The anode layer 20 may further include a second anode active material layer 23, which is positioned in at least one of between the anode current collector 21 and the first anode active material layer 22 (as shown in FIG. 10) or between the solid electrolyte layer 30 and the first anode active material 22 (not shown), and the second anode active material layer 23 may be a metal layer including lithium or a lithium alloy.

Preparation of Cathode Layer

A slurry may be prepared by adding to a nonpolar solvent, materials forming a cathode active material layer 12 such as a cathode active material, a conductive material, a binder, a solid electrolyte, or the like, or a combination thereof. The produced slurry may be coated and dried on a cathode current collector 11. The laminated body obtained therefrom may be pressed to produce a cathode layer 10. The pressing may be conducted by a method using a roll press, a flat press, or the like, but without being limited thereto, the pressing may be conducted by any suitable press available in the art. The pressing process may be omitted. Alternatively, the cathode layer 10 may be prepared by having a mixture of materials forming the cathode active material layer 12 compacted into a pellet form, or stretched (molded) into a sheet form. If the cathode 10 is prepared by the method described above, the cathode current collector 11 may be omitted.

Preparation of Solid Electrolyte Layer

The solid electrolyte layer 30 may be, for example, a composite solid electrolyte according to one or more embodiments.

The solid electrolyte layer may be prepared by the same method as the composite solid electrolyte described above.

Preparation of All Solid Secondary Battery

The cathode layer 10, the anode layer 20, and the solid electrolyte layer 30 prepared by the processes described above may be stacked and pressed such that the cathode layer 10 and the anode layer 20 have the solid electrolyte layer 30 therebetween, thereby completing the manufacture of an all-solid secondary battery 1.

For example, the solid electrolyte layer 30 may be positioned on the cathode layer 10, thereby preparing a second laminated body. Subsequently, the anode layer 20 may be positioned on the second laminated body so as to bring the solid electrolyte layer 30 and the first anode active material layer into contact with each other, thereby completing the manufacture of an all-solid secondary battery 10.

The configuration and preparation method of an all solid secondary battery described above are merely examples, and appropriate modifications in its constitutive elements and preparation process may be possible.

An all-solid secondary battery according to one or more embodiments may be mounted in a small ITS or a large electric vehicle, depending on the capacity and size of the battery.

Hereinbelow, the present disclosure will be described in further detail in conjunction with Examples and Comparative Examples, but embodiments are not limited to the examples described below.

EXAMPLES

Preparation of Solid Electrolyte

Preparation Example 1: Preparation of Mg-LAGP

Precursors $Li_2CO_3$, $Al_2O_3$, MgO, $Ge_2O_3$, and $(NH_4)_2HPO_4$ were mixed together to form a precursor mixture, and the precursor mixture was measured according to the composition of a final synthesis product and mixed in a mortar. $Li_2CO_3$ was used in excess of 10% in consideration of volatilization. The precursor mixture was heat-treated in an alumina crucible, at 300°C in the air for 12 hours. The powder after the heat-treatment was pulverized in a mortar and transferred back to the alumina crucible, and then heat-treated in the air at 400°C for 1 hour, and then at 900°C for 2 hours, consecutively. The powder after the final heat-treatment was placed in a zirconia container and pulverized in a wet condition with zirconia balls and ethanol at 400 revolutions per minute (rpm) for 2 hours in a planetary mill. After the milling, the resulting powder was dried at 80°C overnight to form a synthesized powder.

For further pulverization of particles, a planetary mill and a jet mill were used at 400 rpm for 2 hours to produce $Li_{1.2}Al_{0.1}Mg_{0.05}Ge_{1.85}(PO_4)_3$ (Mg-LAGP) in a powder state having an average particle diameter of 0.7 $\mu$m.

Preparation Example 2: Preparation of Mg-LATP

$Li_{1.2}Al_{0.1}Mg_{0.05}Ti_{1.85}(PO_4)_3$ (Mg-LATP) was prepared in a powder state following a similar process as Preparation Example 1, except that $TiO_2$ was used instead of $Ge_2O_3$ for preparation of the precursor mixture.

Preparation Example 3: Preparation of Mg-LAZP

$Li_{1.2}Al_{0.1}Mg_{0.05}Zr_{1.85}(PO_4)_3$ (Mg-LAZP) was prepared in a powder state following a similar process as Preparation Example 1, except that $Zr_2O_3$ was used instead of $Ge_2O_3$ for preparation of the precursor mixture.

Preparation Example 4: Preparation of Mg-LAHP

$Li_{1.2}Al_{0.1}Mg_{0.05}Hf_{1.85}(PO_4)_3$ (Mg-LAHP) was prepared in a powder state following a similar process as Preparation Example 1, except that $Hf_2O_3$ was used instead of $Ge_2O_3$ for preparation of the precursor mixture.

Preparation Example 5: Preparation of Mg-LASP

$Li_{1.2}Al_{0.1}Mg_{0.05}Sn_{1.85}(PO_4)_3$ (Mg-LASP) was prepared in a powder state following a similar process as Preparation Example 1, except that $Sn_2O_3$ was used instead of $Ge_2O_3$ for preparation of the precursor mixture.

Comparative Preparation Example 1: Preparation of LAGP

$Li_{1.5}Al_{0.5}Ge_{1.5}(PO_4)_3$(LAGP) in a powder state was synthesized following a similar process as Preparation Example 1, except that when preparing the precursor mixture, MgO was not used, and the amount of each precursor was stoichiometrically controlled so as to produce $Li_{1.5}Al_{0.5}Ge_{1.5}(PO_4)_3$.

Comparative Preparation Example 2: Preparation of LATP

$Li_{1.5}Al_{0.5}Ti_{1.5}(PO_4)_3$(LATP) in a powder state was synthesized following a similar process as Preparation Example 2, except that when preparing the precursor mixture, MgO was not used, the amount of each precursor was stoichiometrically controlled so as to produce $Li_{1.5}Al_{0.5}Ti_{1.5}(PO_4)_3$.

Preparation of Composite Solid Electrolyte

Example 1: Composite Solid Electrolyte (Mg-LAGP/Mg-LATP)

The solid electrolyte powder Mg-LAGP of Preparation Example 1, polyvinyl butyral (PVB, B79 Monsanto Chemical Co.)(B79) as a binder, a phosphate-containing block copolymer (phosphate-ester-containing block polymer) (BYK111) as a dispersing agent, and a di-n-butyl phthalate (DBP) as a plasticizer were mixed together in a weight ratio of 1:0.1:0.05:0.05, and ethanol was added thereto as a solvent. The resulting mixture was mixed by a mixer to produce a slurry. The slurry was coated on a silica-coated PET release film by a doctor blade (gap: 200 $\mu$m) and dried for 300 minutes in the air, and dried overnight at 60°C in a vacuum oven to form a coating layer, thereby preparing an Mg-LAGP green sheet formed on the release film.
The Mg-LAGP green sheet formed on the release film obtained therefrom was cut, and two sheets thus obtained were placed, one on top of the other, and laminated by a hot press adjusted to 80°C.
By repeating the lamination process until a desired thickness was achieved, a Mg-LAGP laminate was obtained. The Mg-LAGP laminate was cut into a 1 centimeter (cm) $\times$ 1 cm square and produced into a chip form. Apart from the above, using the same process as the above-described Mg-LAGP laminate, except that the Mg-LATP of Preparation Example 2 was used instead of the Mg-LAGP of Preparation Example 1, a Mg-LATP laminate was obtained.
A Mg-LAGP laminate was laminated on a Mg-LATP laminate, which is the second solid electrolyte, by thermocompression and then compressed by cold isostatic pressing (CIP) to form a Mg-LAGP /Mg-LATP laminate.
The Mg-LAGP/Mg-LATP laminate was subjected to a first heat-treatment for 24 hours at a temperature of 500°C or less to remove organic materials therefrom, and then subjected to a second heat-treatment for 2 hours at a temperature ($T_1$) of 750°C, followed by annealing, thereby completing the preparation of a composite solid electrolyte (Mg-LAGP/Mg-LATP) containing the first solid electrolyte and the second solid electrolyte.

Example 2: Composite Solid Electrolyte (Mg-LAGP/Mg-LATP)

A composite solid electrolyte (Mg-LAGP/Mg-LATP) was prepared following a similar process as Example 1, except that the temperature ($T_1$) during the composite solid electrolyte preparation was changed from 750°C to 700°C.

Examples 3-7: Preparation of Composite Solid Electrolyte (Mg-LAGP/Mg-LATP) and Cell

A composite solid electrolyte was prepared following a similar process as Example 1, except that the thicknesses of the first solid electrolyte and the second solid electrolyte of the composite solid electrolyte were changed to thicknesses as shown in Table 1 below.

Example 8: Preparation of Composite Solid Electrolyte (Mg-LAGP/Mg-LATP) and Cell

A composite solid electrolyte was prepared following a similar process as Example 1, except that the temperature ($T_1$) during the composite solid electrolyte preparation was changed from 750°C to 780°C.
In preparation of the composite solid electrolytes of Examples 1-8, the thickness of the first solid electrolyte, the thickness of the second solid electrolyte, and the secondary heat-treatment temperature ($T_1$) are shown in Table 1 below.

Table 1

| Example | Thickness of the first solid electrolyte ($\mu$m) | Thickness of the second solid electrolyte ($\mu$m) | Second heat-treatment temperature ($T_1$) (°C) |
|---|---|---|---|
| Example 1 | 20 | 430 | 750 |
| Example 2 | 20 | 430 | 700 |
| Example 3 | 20 | 600 | 750 |
| Example 4 | 20 | 100 | 750 |
| Example 5 | 5 | 150 | 750 |
| Example 6 | 30 | 150 | 750 |
| Example 7 | 3 | 50 | 750 |
| Example 8 | 20 | 430 | 780 |

Example 9: Composite Solid Electrolyte (Mg-LAGP/Mg-LAZP)

A Mg-LAZP laminate having a thickness of 430 $\mu$m was obtained following a similar process described above, except that the Mg-LAZP of Preparation Example 3 was used instead of the Mg-LATP of Preparation Example 2.
A composite solid electrolyte (Mg-LAGP/Mg-LAZP) was prepared following a similar process as Example 1, except that the above laminate was used.

Example 10: Preparation of Composite Solid Electrolyte (Mg-LAGP/Mg-LAHP) and Cell

A Mg-LAHP laminate having a thickness of 430 $\mu$m was obtained following a similar process described above, except that the Mg-LAHP of Preparation Example 4 was used instead of the Mg-LAGP of Preparation Example 1.
A composite solid electrolyte (Mg-LAGP/Mg-LAHP) was prepared following a similar process as Example 1, except that the above laminate was used.

Example 11: Composite Solid Electrolyte (Mg-LAGP/Mg-LASP)

A Mg-LASP laminate having a thickness of 430 $\mu$m was obtained following a similar process described above, except that the Mg-LASP of Preparation Example 5 was used instead of the Mg-LAGP of Preparation Example 1.
A composite solid electrolyte (Mg-LAGP/Mg-LASP) was prepared following a similar process as Example 1, except that the above laminate was used.

Example 12: Composite Solid Electrolyte (Mg-LAGP/LATP)

An LATP laminate having a thickness of 430 $\mu$m was obtained following a similar process described above, except that the LATP of Comparative Preparation Example 2 was used instead of the Mg-LAGP of Preparation Example 1.
A composite solid electrolyte (Mg-LAGP/LATP) was prepared following the same process as Example 1, except that the above laminate was used.

Comparative Example 1: Solid Electrolyte (LAGP)

The solid electrolyte powder LAGP of Comparative Preparation Example 1, polyvinyl butyral (PVB, B79 Monsanto Chemical Co.)(B79) as a binder, a phosphate-containing block copolymer (phosphate-ester-containing block polymer) (BYK111) as a dispersing agent, and di-n-butyl phthalate (DBP) as a plasticizer were mixed in a weight ratio of 1:0.1:0.05:0.05, and ethanol was added thereto as a solvent. The resulting mixture was then mixed in a mixer to thereby prepare a slurry.
The slurry was coated onto a silica-coated polyethylene phthalate (PET) release film by a doctor blade (gap: 200 $\mu$m) and dried for 300 minutes in the air, and then dried overnight in a vacuum oven at 60°C, thereby forming a coating layer. The Mg-LAGP green sheet on the release film was punched to a diameter of 13 mm, and two sheets resulting therefrom were placed one on top of the other and laminated by a hot press adjusted to 80°C.
A laminate was prepared by repeating the lamination process until a desired thickness was achieved.
A laminate was formed and prepared through a process in which the two green sheets were further laminated by thermo-compression and then pressed by CIP.

After removing organic matter from the laminate by performing a first heat-treatment for 24 hours at a temperature of 500°C or less, the laminate was subjected to a second heat-treatment for 2 hours at temperature ($T_1$) of 700°C, and then annealed, thereby forming an LAGP solid electrolyte (thickness of 450 $\mu$m).

Comparative Examples 2 and 3: Solid Electrolyte (LAGP)

LAGP solid electrolytes were prepared following a similar process as Comparative Example 1, except that the second heat-treatment temperature ($T_1$) during the solid electrolyte preparation was changed from 700°C to 750°C or from 700°C to 800°C, respectively.

Comparative Example 4: Solid Electrolyte (Mg-LAGP)

An Mg-LAGP solid electrolyte was prepared following a similar process as Comparative Example 1, except that the solid electrolyte powder Mg-LAGP in Preparation Example 1 was used instead of the solid electrolyte powder LAGP in Comparative Preparation Example 1.

Comparative Examples 5 and 6: Solid Electrolyte (Mg-LAGP)

Mg-LAGP solid electrolytes were prepared following a similar process as Comparative Example 4, except that the second heat-treatment temperature ($T_1$) during the solid electrolyte preparation was changed from 700°C to 750°C or from 700°C to 800 °C, respectively.

Comparative Example 7: Solid Electrolyte (Mg-LATP)

An Mg-LATP solid electrolyte was prepared following a similar process as Comparative Example 1, except that the solid electrolyte powder Mg-LATP in Preparation Example 2 was used instead of the solid electrolyte powder LAGP in Comparative Preparation Example 1.

Comparative Examples 8 and 9: Solid Electrolyte (Mg-LATP)

Mg-LATP solid electrolytes were prepared following a similar process as Comparative Example 5, except that the second heat-treatment temperature ($T_1$) during the solid electrolyte preparation was changed from 700°C to 750°C or from 700°C to 800 °C, respectively.

Comparative Example 10: Solid Electrolyte (a blend of Mg-LAGP and Mg-LTAP) The Mg-LGAP solid electrolyte powder of Preparation Example 1, the solid electrolyte powder Mg-LATP of Preparation Example 2, a binder (B79), a dispersant agent (BYK111), and a plasticizer (di-n-butyl phthalate (DBP)) were mixed in a weight ratio of 0.5:0.5: 0.1: 0.05: 0.05 to obtain a mixture, and ethanol as a solvent was added to the mixture, and the resulting mixture was mixed in a mixer to produce a slurry.

The slurry was coated onto a silica-coated PET release film by a doctor blade (gap: 200 $\mu$m) and dried for 300 minutes in the air, and then dried overnight in a vacuum oven at 60°C, thereby forming a coating layer. The coating layer on the release film was cut, and two pieces of the coating layer resulting therefrom were superimposed and laminated by a hot press adjusted to 80°C. The lamination process was repeated until a desired thickness was obtained.

The laminate was cut into a square of width 1 cm $\times$ length 1 cm and produced into a chip form to thereby form a green sheet.

A laminate was formed and prepared through a process in which two such green sheets were further laminated by thermo-compression and then pressed by CIP.

After removing organic matter from the laminate by performing a first heat-treatment for 24 hours at a temperature of 500°C or less, the laminate was subjected to a second heat-treatment for 2 hours at temperature ($T_1$) of 700°C to 800°C, followed by annealing, to thereby form a solid electrolyte (thickness of 450 $\mu$m).

Comparative Example 11: Solid Electrolyte (LAGP/LATP)

A solid electrolyte was prepared following a similar process as Example 1, except that when preparing the slurry, instead of using the solid electrolyte powder Mg-LGAP of Preparation Example 1 and the solid electrolyte powder Mg-LATP of Preparation Example 2, the LAGP of Comparative Preparation Example 1 and the LATP of Comparative Preparation Example 2 were used, respectively.

After removing the organic matter from the laminate by performing a first heat-treatment for 24 hours at a temperature of 500°C or less, the laminate was subjected to a second heat-treatment for 2 hours at a temperature ($T_1$) of 800°C, followed by annealing, to thereby form a solid electrolyte (thickness of 450 $\mu$m). When performed according to Comparative Example 11, obtaining a solid electrolyte with a desired ion conductivity requires the $T_1$ to increase to 800 °C, thus making a low-temperature heat-treatment difficult.

As a result, the co-sintering temperature was high when manufacturing a cell containing the above solid electrolyte.

Comparative Example 12: Solid Electrolyte (LATP/LAGP)

A solid electrolyte was prepared following a similar process as Example 1, except that when preparing the slurry, instead of using the solid electrolyte powder Mg-LGAP of Preparation Example 1 and the solid electrolyte powder Mg-LATP of Preparation Example 2, the LATP of Comparative Preparation Example 2 and the LTGP of Comparative Preparation Example 2 were used, respectively.

After removing the organic matter from the laminate by performing a first heat-treatment for 24 hours at a temperature of 500°C or less, the laminate was subjected to a second heat-treatment for 2 hours at a temperature ($T_1$) of 800°C, followed by annealing, to thereby form a solid electrolyte (thickness of 450 $\mu$m).

Evaluation Example 1: Degree of Densification

The weight and dimensions of the composite solid electrolyte of Examples 1 and 2 and the solid electrolyte prepared according to Comparative Examples 1-9 were measured, and degree of densification was calculated through the ratio of density to theoretical density.

The results of the degree of densification calculation are shown in Table 2 below.

Evaluation Example 2: Ionic Conductivity

Ionic conductivities of cells employing the composite solid electrolytes of Examples 1 and 2 and cells employing the solid electrolytes of Comparative Examples 1-9 were evaluated. 0.2 grams (g) of Mg-LGAP, which was powder of the compound of Preparation Example 1, was placed into a mold having a diameter of 13 mm and pressed with a 1.5-ton press to form pellets, followed by a heat-treatment according to each heat treatment condition.

The sintered body obtained from the heat-treatment was surface-polished, and then a platinum thin film was formed on both sides thereof by sputtering, to thereby form a cell.

For the cell, resistance was measured from -20°C to 80°C using a potentiostatic impedance measurement method by varying a 10 mV alternating current from 1 megahertz (MHz) to 0.01 Hz versus open circuit voltage (OCV). From the resulting resistance, a total resistance ($R_{total}$) value was obtained, and by correcting electrode surface and pellet thickness based on this value, ionic conductivity was calculated according to Equation 1.

The results of the ionic conductivity measurement are shown in Table 2 below.

## Equation 1

$$\sigma T = A \exp(E_a/RT)$$

In Equation 1, $E_a$ represents the activation energy, T represents the absolute temperature, A represents the pre-exponential factor, R represents the gas constant, and $\sigma$ represents the conductivity.

Evaluation Example 3: Reduction Stability with Anode Material

To evaluate the reduction stability of the composite solid electrolyte of Example 1 and the solid electrolyte of Comparative Example 8 with anode materials, linear scan voltammetry analysis was performed as follows. The composite solid electrolyte of Example 1 or the solid electrolyte of Comparative Example 8 were stacked on a lithium metal anode (thickness of about 20 $\mu$m).

Then, on top of the composite solid electrolyte, a platinum film (thickness of about 30 nm) was formed by sputtering using platinum. Between the lithium metal and the composite solid electrolyte, a polyethylene separator membrane (Celgard) containing an electrolyte solution containing propylene carbonate (PC) and 1 molar (M) lithium bis(trifluoromethanesulfonyl)imide (LiTFSI) were positioned, to thereby form a cell.

The structure of the cell had a laminated body in which a lithium metal anode, a polyethylene separation membrane (Celgard) containing PC and 1 M LiTFSI, a composite solid electrolyte (first solid electrolyte/second solid electrolyte), and a platinum film were sequentially disposed. To evaluate a reduction potential of the composite solid electrolyte of Example 1 or the solid electrolyte of Comparative Example 8, using a linear scan voltammetry method, current values obtained from a reaction while varying a voltage at a rate of 0.1 millivolts per second (mV/sec) from OCV to 0.1 V were measured.

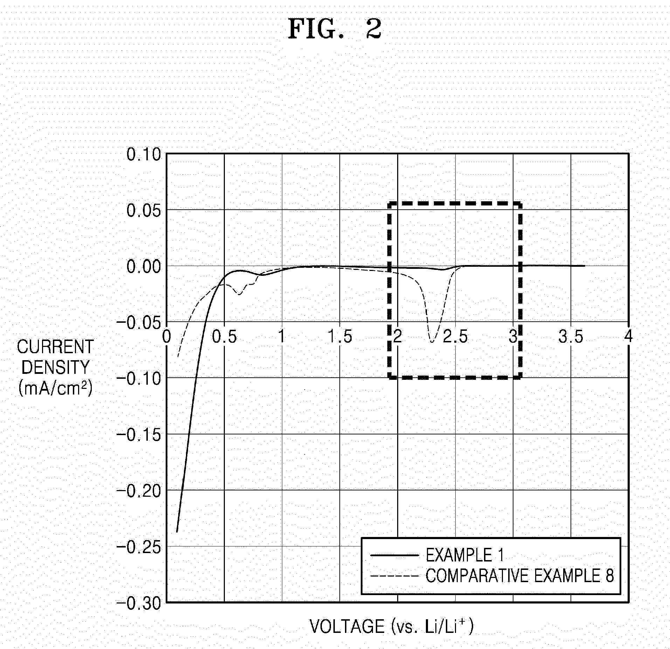

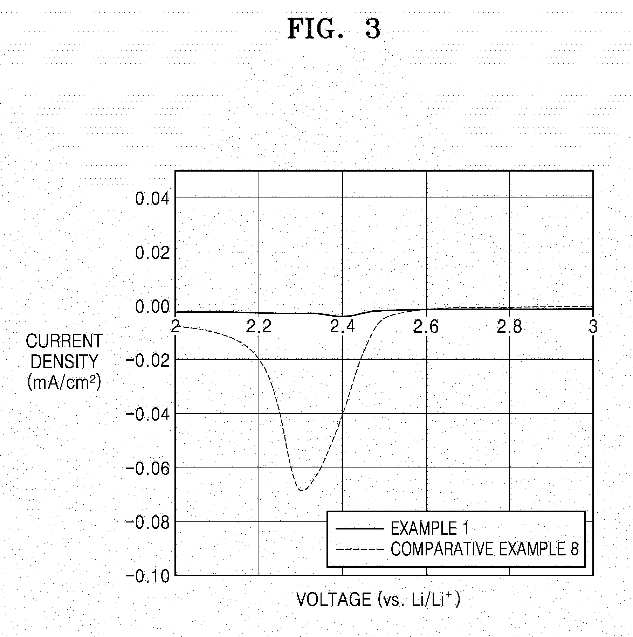

Here, the cathode peak current in the cell of Example 1 was 3.1 nanoamperes per square centimeter (nA/cm$^2$), and the cathode peak current in the cell of Comparative Example 8 was 69 nA/cm$^2$. The results of the linear scan voltammetry analysis are shown in FIGS. 2 and 3. FIG. 2 is a graph showing a result of measurements made by linear scan voltammetry for a cell employing the composite solid electrolyte of Example 1 and a cell employing the solid electrolyte of Comparative Example 8.

FIG. 3 shows a magnified view of an area depicted in FIG. 2. Referring to FIG. 2 and FIG. 3, the cell employing the solid electrolyte of Comparative Example 1 exhibited a discharge peak at 2 V to 2.5 V, whereas the cell employing the composite solid electrolyte of Example 1 did not exhibit any discharge peak between 2 V to 2.5 V.

Such an absence of a discharge peaks indicates that the composite solid electrolyte of Example 1 had improved reduction stability compared to that of the solid electrolyte of Comparative Example 1. Based on the linear scan voltammetry described above, the reduction stability of an anode material was evaluated, and the evaluation results are shown in Table 2 below. In Table 2 below, the absence of discharge peaks was marked as "o", indicating excellent reduction stability with the anode material.

In addition, the presence of discharge peaks was marked as "X", indicating poor reduction stability with the anode material.

Table 2

| Example | Composition | SE thickness ($\mu$m) | $T_1$ (°C) | Degree of Densification (%) | Room-temperature Ionic conductivity (S/cm at RT) | Reduction Stability with Anode Materials |
|---|---|---|---|---|---|---|
| Example 1 | Mg-LAGP/ Mg-LATP | 20/ 430 | 750 | 87 | $4.59 \times 10^{-5}$ | ○ |
| Example 2 | Mg-LAGP/ Mg-LATP | 20/ 430 | 700 | 76 | $3.02 \times 10^{-5}$ | ○ |
| Comparative Example 1 | LAGP | 450 | 700 | 59 | $1.53 \times 10^{-5}$ | ○ |
| Comparative Example 2 | LAGP | 450 | 750 | 71 | $5.59 \times 10^{-5}$ | ○ |
| Comparative Example 3 | LAGP | 450 | 800 | 89 | $1.63 \times 10^{-4}$ | ○ |
| Comparative Example 4 | Mg-LAGP | 450 | 700 | 88 | $1.21 \times 10^{-5}$ | ○ |
| Comparative Example 5 | Mg-LAGP | 450 | 750 | 88 | $2.15 \times 10^{-5}$ | ○ |
| Comparative Example 6 | Mg-LAGP | 450 | 800 | 90 | $2.32 \times 10^{-5}$ | ○ |
| Comparative Example 7 | Mg-LATP | 450 | 700 | 75 | $3.12 \times 10^{-5}$ | X |
| Comparative Example 8 | Mg-LATP | 450 | 750 | 83 | $9.85 \times 10^{-5}$ | X |
| Comparative Example 9 | Mg-LATP | 450 | 800 | 84 | $1.65 \times 10^{-4}$ | X |

Referring to Table 2, the solid electrolytes of Comparative Example 1 and 2 had a low degree of densification, and therefore, a low sintered density.

The solid electrolyte of Comparative Example 3 requires a heat-treatment at 800°C to achieve a sufficient degree of densification, and when heat-treated at this temperature, has an increased likelihood to react with an electrode active material at a high temperature. The solid electrolytes of Comparative Examples 4 to 6, despite having excellent degree of densification, ionic conductivity, and reduction stability with anode materials, required germanium, which is costly, to be formed to a thickness of 450 $\mu$m. Therefore, the solid electrolytes of Comparative Examples 4 to 6 have extremely high manufacturing costs and thus are difficult to find practical applications. In addition, the solid electrolytes of Comparative Examples 7 to 9 have poor stability with anode materials, and thus were difficult to find practical applications.

To the contrary, the composite solid electrolytes of Examples 1 and 2 not only show excellent reduction stability with anode materials, but also have a high degree of densification and excellent ionic conductivity.

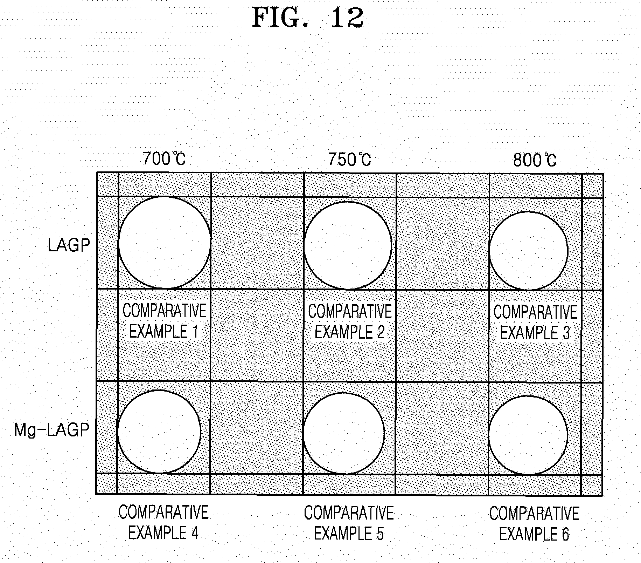

In addition, while preparing the solid electrolytes of Comparative Examples 1 to 6, diameter changes of the sintered body was examined, and the results thereof are shown in FIG. 12.

As shown in FIG. 12, in the solid electrolytes of Comparative Examples 1 to 6, the diameter changes of the sintered body according to heat-treatment temperature were observed with a naked eye. From this result, the degree of densification of the sintered body was determined, and this degree of densification affected ionic conductivity, as well.

In addition, the composite solid electrolytes of Examples 3 to 12 and the solid electrolytes of Comparative Example 10 and Comparative Example 12 were evaluated for reduction stability with anode material by a linear scan voltammetry analysis, performed under the same conditions as the linear scan voltammetry analysis performed on the composite solid electrolyte of Example 1.

As a result, in the same manner as in the composite solid electrolyte of Example 1, no discharge peak was observed in the composite solid electrolytes of Examples 3 to 12. From this result, it was confirmed that the composite solid electrolytes of Examples 3 to 12 had excellent reduction stability with anode materials.

However, discharge peaks were observed in the solid electrolytes of Comparative Example 10 and Comparative Example 12 in the same manner as in Comparative Example 1, and from this observation, it followed that the solid electrolytes of Comparative Example 10 and Comparative Example 12 had poor reduction stability with the anode material, thus making it difficult to find practical applications for these materials.

Evaluation Example 4: Scanning Electron Microscopy Analysis

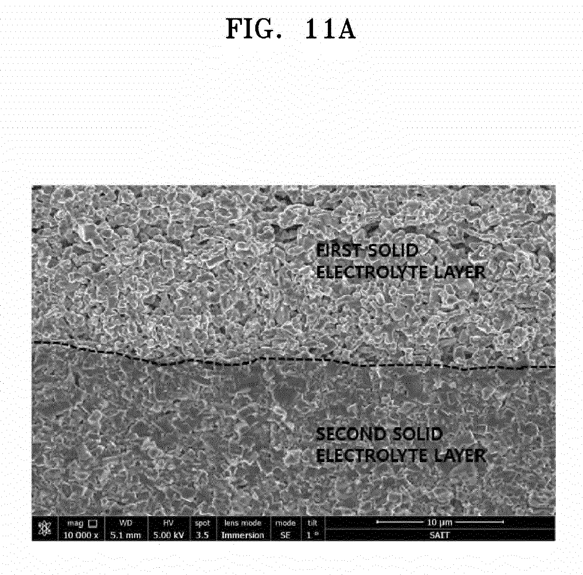

The composite solid electrolyte prepared according to Example 1 was analyzed by a scanning electron microscope (SEM). For the scanning electron microscopy analysis, an FE-SEM instrument (Hitachi SU 8030) was used. Images of the scanning electron microscopy analysis are as shown in FIG. 11A.

Referring to FIG. 11A, the composite solid electrolyte of Example 1 shows a structure in which particles of each of the first solid electrolyte and the second solid electrolyte were linked to one another within a layer, and interlayer particles at a boundary between the first solid electrolyte and the second solid electrolyte also were linked to one another.

Evaluation Example 5: SEM-EDS Analysis

SEM-EDS analysis was performed on the composite solid electrolyte of Example 1. The analysis was performed using Nova NanoSEM 450 instrument (FEI Company).

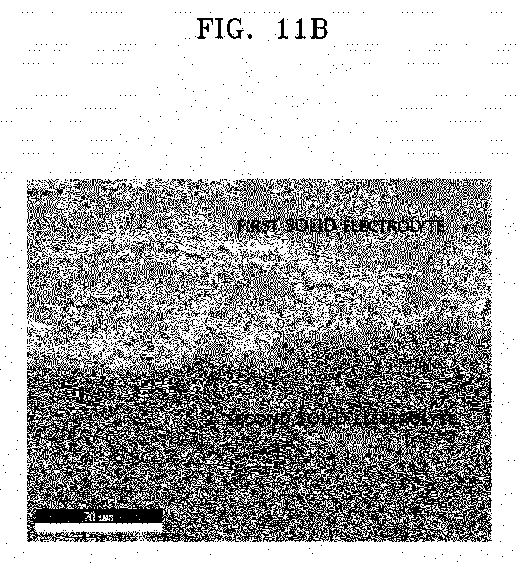

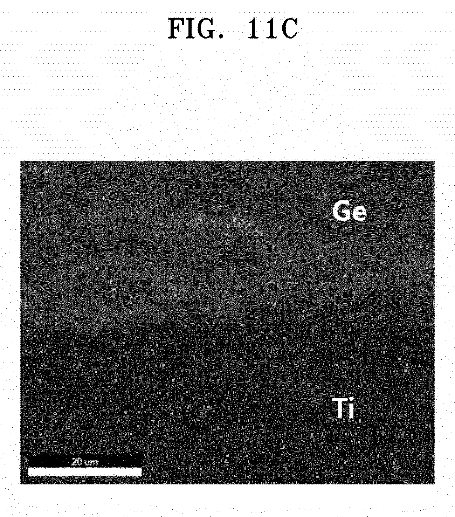

The results of the SEM-EDS analysis are shown in FIG. 11B and FIG. 11C.

From the analysis, it was possible to identify a boundary between the first solid electrolyte layer and the second solid electrolyte layer from the distribution of Ge and Ti in the composite solid electrolyte of Example 1.

A composite solid electrolyte for a secondary battery according to one or more embodiments may improve stability with an oxide anode material.

Use of the composite solid electrolyte may lower a temperature of simultaneous heat-treatment of a battery laminate including an anode, a solid electrolyte, and a cathode. Even when the simultaneous heat-treatment is conducted at such a low temperature, a composite solid electrolyte with improved sintered density and a secondary battery having improved cell performance by employing the composite solid electrolyte may be produced. It should be understood that exemplary embodiments described herein should be considered in a descriptive sense only and not for purposes of limitation.

Descriptions of features or aspects within each exemplary embodiment should typically be considered as available for other similar features or aspects in other embodiments. While one or more exemplary embodiments have been described with reference to the figures, it will be understood by those of ordinary skill in the art that various changes in form and details may be made therein without departing from the spirit and scope as defined by the following claims.

**Claims**

1. A composite solid electrolyte for a secondary battery including an anode, wherein the composite solid electrolyte comprises a first solid electrolyte including a compound represented by Formula 1 and a second solid electrolyte including a second compound represented by Formula 2,

wherein the first solid electrolyte is disposed adjacent to the anode:

Formula 1 $\quad\quad Li_{1+x+2y}Al_xMg_yM1_{2-x-y}(PO_4)_3$

wherein in Formula 1, M1 is germanium (Ge), zirconium (Zr), hafnium (Hf), tin (Sn), or a combination thereof, and $0<x<0.6$ and $0<y<0.2$ are satisfied,

Formula 2 $\quad\quad Li_{1+x+2y}Al_xMg_yM2_{2-x-y}(PO_4)_3$

wherein in Formula 2, M2 is titanium (Ti), germanium (Ge), zirconium (Zr), hafnium (Hf), tin (Sn), or a combination thereof, and $0<x<0.6$ and $0\leq y<0.2$ are satisfied.

2. The composite solid electrolyte of claim 1, wherein M1 in Formula 1 is germanium (Ge).

3. The composite solid electrolyte of claim 1, wherein in Formula 1, $0.1\leq x\leq 0.5$ and $0.01\leq y\leq 0.1$.

4. The composite solid electrolyte of claim 1, wherein M1 in Formula 1 is germanium (Ge).

5. The composite solid electrolyte of claim 1, wherein in Formula 2, $y>0$ is satisfied, or $0.1\leq x\leq 0.5$ and $0.01\leq y\leq 0.1$ are satisfied.

6. The composite solid electrolyte of claim 1, wherein M2 in Formula 2 is titanium (Ti).

7. The composite solid electrolyte of claim 1, wherein a ratio of a thickness of the first solid electrolyte and a thickness of the second solid electrolyte is 1:5 to 1:100.

8. The composite solid electrolyte of claim 1, wherein the thickness of the first solid electrolyte is from 1 $\mu$m to 30 $\mu$m, and the thickness of the second solid electrolyte is from 50 $\mu$m to 500 $\mu$m.

9. The composite solid electrolyte of claim 1, wherein particles of each of the first solid electrolyte and the second solid electrolyte are connected to each other, and interlayer particles at a boundary between the first solid electrolyte and the second solid electrolyte are connected to each other.

10. The composite solid electrolyte of claim 1, wherein the compound represented by Formula 1 is $Li_{1.2}Al_{0.1}Mg_{0.05}Ge_{1.85}(PO_4)_3$, $Li_{1.3}Al_{0.2}Mg_{0.05}Ge_{1.75}(PO_4)_3$, $Li_{1.4}Al_{0.3}Mg_{0.05}Ge_{1.65}(PO_4)_3$, $Li_{1.4}Al_{0.2}Mg_{0.1}Ge_{1.7}(PO_4)_3$, $Li_{1.2}Al_{0.1}Mg_{0.05}Zr_{1.85}(PO_4)_3$, $Li_{1.3}Al_{0.2}Mg_{0.05}Zr_{1.75}(PO_4)_3$, $Li_{1.4}Al_{0.3}Mg_{0.05}Zr_{1.65}(PO_4)_3$, $Li_{1.4}Al_{0.2}Mg_{0.1}Zr_{1.7}(PO_4)_3$, $Li_{1.2}Al_{0.1}Mg_{0.05}Hf_{1.85}(PO_4)_3$, $Li_{1.3}Al_{0.2}Mg_{0.05}Hf_{1.75}(PO_4)_3$, $Li_{1.4}Al_{0.3}Mg_{0.05}Hf_{1.65}(PO_4)_3$, $Li_{1.4}Al_{0.2}Mg_{0.1}Hf_{1.7}(PO_4)_3$, $Li_{1.2}Al_{0.1}Mg_{0.05}Sn_{1.85}(PO_4)_3$, $Li_{1.3}Al_{0.2}Mg_{0.05}Sn_{1.75}(PO_4)_3$, $Li_{1.4}Al_{0.3}Mg_{0.05}Sn_{1.65}(PO_4)_3$, $Li_{1.4}Al_{0.2}Mg_{0.1}Sn_{1.7}(PO_4)_3$, or a combination thereof.

11. The composite solid electrolyte of claim 1, wherein the compound represented by Formula 2 is $Li_{1.3}Al_{0.2}Mg_{0.05}Ti_{1.75}(PO_4)_3$, $Li_{1.2}Al_{0.1}Mg_{0.05}Ti_{1.85}(PO_4)_3$, $Li_{1.4}Al_{0.3}Mg_{0.05}Ti_{1.65}(PO_4)_3$, $Li_{1.4}Al_{0.2}Mg_{0.1}Ti_{1.7}(PO_4)_3$, $Li_{1.3}Al_{0.2}Mg_{0.05}Ge_{1.75}(PO_4)_3$, $Li_{1.2}Al_{0.1}Mg_{0.05}Ge_{1.85}(PO_4)_3$, $Li_{1.4}Al_{0.3}Mg_{0.05}Ge_{1.65}(PO_4)_3$, $Li_{1.4}Al_{0.2}Mg_{0.1}Ge_{1.7}(PO_4)_3$, $Li_{1.3}Al_{0.2}Mg_{0.05}Zr_{1.75}(PO_4)_3$, $Li_{1.2}Al_{0.1}Mg_{0.05}Zr_{1.85}(PO_4)_3$, $Li_{1.4}Al_{0.3}Mg_{0.05}Zr_{1.65}(PO_4)_3$, $Li_{1.4}Al_{0.2}Mg_{0.1}Zr_{1.7}(PO_4)_3$, $Li_{1.3}Al_{0.2}Mg_{0.05}Hf_{1.75}(PO_4)_3$, $Li_{1.2}Al_{0.1}Mg_{0.05}Hf_{1.85}(PO_4)_3$, $Li_{1.4}Al_{0.3}Mg_{0.05}Hf_{1.65}(PO_4)_3$, $Li_{1.4}Al_{0.2}Mg_{0.1}Hf_{1.7}(PO_4)_3$, $Li_{1.3}Al_{0.2}Mg_{0.05}Sn_{1.75}(PO_4)_3$, $Li_{1.2}Al_{0.1}Mg_{0.05}Sn_{1.85}(PO_4)_3$, $Li_{1.4}Al_{0.3}Mg_{0.05}Sn_{1.65}(PO_4)_3$, $Li_{1.4}Al_{0.2}Mg_{0.1}Sn_{1.7}(PO_4)_3$, $Li_{1.5}Al_{0.5}Ge_{1.5}(PO_4)_3$, $Li_{1.5}Al_{0.5}Ti_{1.5}(PO_4)_3$, $Li_{1.5}Al_{0.5}Zr_{1.5}(PO_4)_3$, $Li_{1.5}Al_{0.5}Hf_{1.5}(PO_4)_3$, $Li_{1.5}Al_{0.5}Sn_{1.5}(PO_4)_3$, or a combination thereof.

12. The composite solid electrolyte of claim 1, wherein the composite solid electrolyte has an ion conductivity at room temperature (25 °C) is $10^{-5}$ S/cm or more and a density of 70 % to 99 %.

13. The composite solid electrolyte of claim 1, wherein the composite solid electrolyte further comprises a third electrolyte including a compound represented by Formula 1 below, wherein the third solid electrolyte is disposed adjacent to the cathode:

Formula 1 $Li_{1+x+2y}Al_xMg_yM1_{2-x-y}(PO_4)_3$

wherein in Formula 1, M1 is germanium (Ge), zirconium (Zr), hafnium (Hf), tin (Sn), or a combination thereof, and $0<x<0.6$ and $0<y<0.2$ are satisfied.

14. The composite solid electrolyte of claim 13, wherein the third solid electrolyte is from 1 part by weight to 30 parts by weight with respect to 100 parts by weight of the total weight of the composite solid electrolyte.

15. The composite solid electrolyte of claim 1, wherein the anode is an oxide anode.

16. The composite solid electrolyte of claim 1, wherein in the composite solid electrolyte, the first solid electrolyte comprises $Li_{1.2}Al_{0.1}Mg_{0.05}Ge_{1.85}(PO_4)_3$, $Li_{1.3}Al_{0.2}Mg_{0.05}Ge_{1.75}(PO_4)_3$, $Li_{1.4}Al_{0.3}Mg_{0.05}Ge_{1.65}(PO_4)_3$, $Li_{1.4}Al_{0.2}Mg_{0.1}Ge_{1.7}(PO_4)_3$, or a combination thereof, and the second solid electrolyte comprises $Li_{1.3}Al_{0.2}Mg_{0.05}Ti_{1.75}(PO_4)_3$, $Li_{1.2}Al_{0.1}Mg_{0.05}T1_{1.85}(PO_4)_3$, $Li_{1.4}Al_{0.3}Mg_{0.05}Ti_{1.65}(PO_4)_3$, $Li_{1.4}Al_{0.2}Mg_{0.1}Ti_{1.7}(PO_4)_3$, $Li_{1.3}Al_{0.2}Mg_{0.05}Hf_{1.75}(PO_4)_3$, $Li_{1.2}Al_{0.1}Mg_{0.05}Hf_{1.85}(PO_4)_3$, $Li_{1.4}Al_{0.3}Mg_{0.05}Hf_{1.65}(PO_4)_3$, $Li_{1.4}Al_{0.2}Mg_{0.1}Hf_{1.7}(PO_4)_3$, $Li_{1.3}Al_{0.2}Mg_{0.05}Zr_{1.75}(PO_4)_3$, $Li_{1.2}Al_{0.1}Mg_{0.05}Zr_{1.85}(PO_4)_3$, $Li_{1.4}Al_{0.3}Mg_{0.05}Zr_{1.65}(PO_4)_3$, $Li_{1.4}Al_{0.2}Mg_{0.1}Zr_{1.7}(PO_4)_3$, $Li_{1.3}Al_{0.2}Mg_{0.05}Sn_{1.75}(PO_4)_3$, $Li_{1.2}Al_{0.1}Mg_{0.05}Sn_{1.85}(PO_4)_3$, $Li_{1.4}Al_{0.3}Mg_{0.05}Sn_{1.65}(PO_4)_3$, $Li_{1.4}Al_{0.2}Mg_{0.1}Sn_{1.7}(PO_4)_3$, $Li_{1.5}Al_{0.5}Ge_{1.5}(PO_4)_3$, or a combination thereof.

17. A secondary battery, comprising: an anode; a cathode; and a solid electrolyte disposed therebetween, wherein at least one selected from the cathode, the anode, and the solid electrolyte comprises the composite solid electrolyte of any one of claims 1 to 6 and 8 to 16.

18. The secondary battery of claim 17, wherein the anode is an oxide anode, wherein the oxide anode is a lithium titanium oxide, a lithium transition metal oxide, a lithium metal phosphate, a titanium oxide, a vanadium oxide, or a combination thereof

19. The secondary battery of claim 17, wherein the secondary battery is a lithium secondary battery or an all-solid battery.

20. The secondary battery of claim 19, wherein the all-solid battery is a multi-layer-ceramic (MLC) battery or a thin-film battery.

21. The secondary battery of claim 20, wherein the MLC battery has a laminated structure in which a plurality of unit cells are stacked such that a cathode active material layer and an anode active material layer face each other, each unit cell having a cathode layer including a cathode active material layer; a solid electrolyte layer; and an anode layer including an anode active material layer continuously in this order.

22. The secondary battery of claim 20, wherein the MLC battery has a laminated body in which a plurality of unit cells are stacked such that a cathode active material layer of one unit cell faces an anode active material layer of another unit cell, each unit cell having a cathode active material layer, a solid electrolyte layer, and an anode active material layer continuously in this order.

23. The secondary battery of claim 17, wherein in a linear scan voltammetry analysis of the secondary battery, a reduction peak obtained under a condition of a voltage change of OCV to 0.1 V does not appear between 2 V to 2.5 V.

24. The secondary battery of claim 17, wherein the secondary battery comprises a cathode layer comprising a cathode active material layer; an anode layer comprising an anode current collector and a first anode active material layer or a third anode active material layer; and a solid electrolyte layer arranged between the cathode layer and the anode layer.

25. The secondary battery of claim 24, wherein the first anode active material layer comprises at least one selected from a carbon-based anode active material, and a metal or metalloid anode active material.

26. The secondary battery of claim 25, wherein the carbon-based anode active material comprises at least one selected from an amorphous carbon and a crystalline carbon, and the metal or metalloid anode active material comprises at least one selected from among gold (Au), platinum (Pt), palladium (Pd), silicon (Si), silver (Ag), aluminum (Al), bismuth (Bi), tin (Sn) and zinc (Zn).

**27.** The secondary battery of claim 17, wherein the secondary battery further comprises an anode current collector, and further comprises a second anode active material layer located in at least one of between the anode current collector and the first anode active material layer, and between the solid electrolyte layer and the first anode active material layer,

wherein the second anode active material layer is a metal layer including lithium or a lithium alloy.

**28.** The secondary battery of claim 24, wherein the third anode active material layer is a metal layer comprising lithium or a lithium alloy.

**29.** A method of preparing a secondary battery, the method comprising: preparing a battery laminate by stacking an anode, a composite solid electrolyte, and a cathode, the composite solid electrolyte including a first solid electrolyte including a compound represented by Formula 1 and a second solid electrolyte including a second compound represented by Formula 2; and performing a heat-treatment on the battery laminate at a temperature of less than 800 °C,

wherein the first solid electrolyte is arranged adjacent to the anode.

$$\text{Formula 1} \qquad \text{Li}_{1+x+2y}\text{Al}_x\text{Mg}_y\text{M1}_{2-x-y}(\text{PO}_4)_3$$

wherein in Formula 1, M1 is germanium (Ge), zirconium (Zr), hafnium (Hf), tin (Sn), or a combination thereof, and $0<x<0.6$ and $0<y<0.2$,

$$\text{Formula 2} \qquad \text{Li}_{1+x+2y}\text{Al}_x\text{Mg}_y\text{M2}_{2-x-y}(\text{PO}_4)_3$$

wherein in Formula 2, M2 is titanium (Ti), germanium (Ge), zirconium (Zr), hafnium (Hf), tin (Sn), or a combination thereof, and $0<x<0.6$ and $0\leq y<0.2$.

**30.** The method of claim 29, wherein the heat-treatment is conducted at a temperature of 700 °C to 800 °C.

**31.** The method of claim 29, wherein the anode is an oxide anode, wherein the oxide anode is a lithium titanium oxide, a lithium transition metal oxide, a lithium vanadium phosphate, a titanium oxide, a lithium vanadium phosphate, a titanium oxide ($\text{TiO}_2$), vanadium oxide ($\text{V}_2\text{O}_5$), or a combination thereof.

**32.** The method of claim 29, wherein the composite solid electrolyte further comprises a third solid electrolyte including a compound represented by Formula 1, wherein the third solid electrolyte is disposed adjacent to the cathode:

$$\text{Formula 1} \qquad \text{Li}_{1+x+2y}\text{Al}_x\text{Mg}_y\text{M1}_{2-x-y}(\text{PO}_4)_3$$

wherein in Formula 1, M1 is germanium (Ge), zirconium (Zr), hafnium (Hf), tin (Sn), or a combination thereof, and $0<x<0.6$ and $0<y<0.2$.

FIG. 1

# FIG. 2

# FIG. 3

# FIG. 4

# FIG. 5

710

71
73
72
74
72
73
71

UNIT CELL 2

UNIT CELL 1

# FIG. 6

# FIG. 7A

92
95
96
94

# FIG. 7B

# FIG. 8

# FIG. 9

# FIG. 10

# FIG. 11A

# FIG. 11B

...

FIG. 11C

# FIG. 12

## INTERNATIONAL SEARCH REPORT

| International application No. |
|---|
| **PCT/KR2021/007659** |

### A. CLASSIFICATION OF SUBJECT MATTER

**H01M 10/0562**(2010.01)i; **H01M 4/62**(2006.01)i; **H01M 4/131**(2010.01)i; **H01M 4/136**(2010.01)i; **H01M 10/0585**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 10/0562(2010.01); C01B 25/45(2006.01); H01M 10/052(2010.01); H01M 10/0525(2010.01); H01M 10/056(2010.01); H01M 4/04(2006.01); H01M 4/13(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제1 고체 전해질(first solid electrolyte), 제2 고체 전해질(second solid electrolyte), 세라믹(ceramic), 마그네슘(magnesium, Mg)

### C. DOCUMENTS CONSIDERED TO BE RELEVANT

| Category* | Citation of document, with indication, where appropriate, of the relevant passages | Relevant to claim No. |
|---|---|---|
| Y | KR 10-2018-0084681 A (SAMSUNG ELECTRONICS CO., LTD. et al.) 25 July 2018 (2018-07-25) See claims 1, 15-18, 43 and 46; paragraphs [0001], [0018], [0030], [0037], [0039], [0040], [0042], [0049], [0057], [0067], [0068], [0088], [0089] and [0150]; and figure 1. | 1-32 |
| Y | KR 10-2014-0015700 A (SAMSUNG ELECTRONICS CO., LTD.) 07 February 2014 (2014-02-07) See claims 1, 2, 8, 11, 13 and 14; and paragraphs [0004], [0072], [0079]-[0082], [0086], [0089], [0119], [0121] and [0154]. | 1-32 |
| A | KR 10-1796259 B1 (SEVEN KING ENERGY) 10 November 2017 (2017-11-10) See claims 1, 4 and 19-21; paragraphs [0001], [0029] and [0032]; example 1; and figures 1 and 2. | 1-32 |
| A | US 2017-0162860 A1 (I-TEN) 08 June 2017 (2017-06-08) See claims 27 and 28; and paragraphs [0013]-[0042]. | 1-32 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 September 2021** | **17 September 2021** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2021/007659** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2108136 B1 (KOREA INSTITUTE OF INDUSTRIAL TECHNOLOGY et al.) 07 May 2020 (2020-05-07)<br>   See entire document. | 1-32 |

Form PCT/ISA/210 (second sheet) (July 2019)

## INTERNATIONAL SEARCH REPORT
### Information on patent family members

International application No.

**PCT/KR2021/007659**

| Patent document cited in search report | | | Publication date (day/month/year) | Patent family member(s) | | | Publication date (day/month/year) |
|---|---|---|---|---|---|---|---|
| KR | 10-2018-0084681 | A | 25 July 2018 | US | 10700377 | B2 | 30 June 2020 |
| | | | | US | 2018-0205112 | A1 | 19 July 2018 |
| | | | | WO | 2018-135862 | A1 | 26 July 2018 |
| KR | 10-2014-0015700 | A | 07 February 2014 | KR | 10-1946012 | B1 | 08 February 2019 |
| | | | | US | 2014-0017576 | A1 | 16 January 2014 |
| | | | | US | 9859559 | B2 | 02 January 2018 |
| KR | 10-1796259 | B1 | 10 November 2017 | CN | 110495037 | A | 22 November 2019 |
| | | | | EP | 3605702 | A2 | 05 February 2020 |
| | | | | JP | 2020-512673 | A | 23 April 2020 |
| | | | | US | 2020-0036039 | A1 | 30 January 2020 |
| | | | | WO | 2018-182216 | A2 | 04 October 2018 |
| | | | | WO | 2018-182216 | A3 | 22 November 2018 |
| | | | | WO | 2018-182216 | A9 | 20 December 2018 |
| US | 2017-0162860 | A1 | 08 June 2017 | CN | 106688134 | A | 17 May 2017 |
| | | | | CN | 106688134 | B | 29 September 2020 |
| | | | | EP | 3164900 | A1 | 10 May 2017 |
| | | | | FR | 3023302 | A1 | 08 January 2016 |
| | | | | FR | 3023302 | B1 | 15 July 2016 |
| | | | | JP | 2017-520093 | A | 20 July 2017 |
| | | | | JP | 6758200 | B2 | 23 September 2020 |
| | | | | KR | 10-2017-0024096 | A | 06 March 2017 |
| | | | | WO | 2016-001579 | A1 | 07 January 2016 |
| KR | 10-2108136 | B1 | 07 May 2020 | KR | 10-2020-0018126 | A | 19 February 2020 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2021007659 W
- KR 1020200156929
- KR 20140015700